# EUROPÄISCHE PATENTSCHRIFT

(11) **EP 3 065 530 B1**
(45) Veröffentlichungstag und Bekanntmachung des Hinweises auf die Patenterteilung: **30.03.2022**
(21) Anmeldenummer: 14796100.7
(22) Anmeldetag: 10.11.2014
(51) Int. Cl.: A01C 23/00, A01M 7/00

(54) **VORRICHTUNG ZUM AUSBRINGEN VON FLÜSSIGEN UND/ODER FESTEN WIRKSTOFFEN UND VERFAHREN ZUR STEUERUNG EINER SOLCHEN VORRICHTUNG**
APPARATUS FOR DISCHARGING LIQUID AND/OR SOLID ACTIVE SUBSTANCES AND METHOD FOR CONTROLLING SUCH AN APPARATUS
DISPOSITIF POUR DISTRIBUER DES SUBSTANCES ACTIVES LIQUIDES ET/OU SOLIDES ET PROCÉDÉ DE COMMANDE D'UN TEL DISPOSITIF

(30) Priorität: 10.11.2013 DE 102013112344
(43) Veröffentlichungstag der Anmeldung: 14.09.2016
(60) Teilanmeldung: 22157202.7
(73) Patentinhaber: HORSCH LEEB Application Systems GmbH, 94405 Landau an der Isar (DE)
(72) Erfinder: LEEB, Theodor, 94562 Oberpöring (DE); HIRTHAMMER, Otto, 93128 Hirschling (DE)
(74) Vertreter: Kotitschke, Bernd
(86) Internationale Anmeldenummer: PCT/EP2014/074182
(87) Internationale Veröffentlichungsnummer: WO 2015/067804

(56) Entgegenhaltungen:
- EP-A1- 1 444 894
- EP-A1- 2 591 657
- FR-A1- 2 965 453

## Beschreibung

Die vorliegende Erfindung betrifft eine Vorrichtung zum Ausbringen von flüssigen Wirkstoffen mit den Merkmalen des unabhängigen Anspruchs 1. Weiterhin betrifft die Erfindung ein Verfahren zur Steuerung einer solchen Vorrichtung mit den Merkmalen des unabhängigen Verfahrensanspruchs 9.

Feldspritzen und an Arbeitsmaschinen wie Traktoren angehängte Spritzgestänge weisen teilweise sehr große Arbeitsbreiten von mehr als zwanzig Metern auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung des Spritzmittels jeweils einen definierten Spritzkegel aufweisen, ergibt sich aus einer veränderlichen Distanz der Düsen zum Boden eine ungleichmäßige Bedeckung des Ackers mit Spritzmittel. Auch steigt die Gefahr der Abtrift des Spritzmittels mit zunehmender Distanz der Spritzdüsen vom Boden stark an, da die fein verstäubten Tropfen bereits von geringen Luftbewegungen negativ beeinflusst werden.

Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, da bereits geringe Schrägstellungen des Spritzgestänges zu großen Abstandsdifferenzen der Düsen zum Boden führen.

Hierzu ist bekannt, ein Spritzgestänge um einen zentralen Punkt zumindest um eine Drehachse drehbar an einem Trägerfahrzeug aufzuhängen. Die Drehachse verläuft dabei vorzugsweise parallel zur Längsachse des Trägerfahrzeugs. Um eine gleichmäßige Ausbringung des Spritzmittels zu gewährleisten, muss der Abstand zwischen Oberkante des Bestandes und den Spritzdüsen konstant auf einen definierten Abstand geregelt werden. Auf horizontalen Landwirtschaftsflächen kann dies grundsätzlich durch eine Selbstnivellierung erreicht werden, bei der sich das Spritzgestänge selbst in der Horizontalen ausrichtet, indem der Schwerpunkt des Spritzgestänges unterhalb des zentralen Punkts vorgesehen wird und das Spritzgestänge beispielsweise frei pendelnd drehbar aufgehängt ist. Der gewünschte Effekt stellt sich jedoch nicht bei Landwirtschaftsflächen ein, die entlang eines Hangs verlaufen.

Um den Abstand zwischen Oberkante des Bestandes und den an einem um einen zentralen Punkt drehbar aufgehängten Spritzgestänge angeordneten Spritzdüsen bei beliebig verlaufenden Landwirtschaftsflächen konstant auf einen definierten Abstand zu regeln, ist daher bekannt, ein beispielsweise in einen gewünschten Abstand zum Boden angehobenes Spritzgestänge so um eine durch den zentralen Punkt laufende Drehachse zu drehen, dass dieser Abstand über die gesamte Arbeitsbreite optimiert wird. Hierzu muss ein Ausrichtungsänderungsdrehmoment um eine durch den zentralen Punkt laufende Drehachse auf das Spritzgestänge ausgeübt werden. Dies geschieht vermittels mindestens eines Aktors, welcher zumindest bedarfsweise eine ein Ausrichtungsänderungsdrehmoment um die Drehachse bewirkende Kraft oder ein Kräftepaar vom Trägerfahrzeug auf das Spritzgestänge überträgt, um dessen Ausrichtung zu verändern.

Dieses Ausrichtungsänderungsdrehmoment beschleunigt das Spritzgestänge in einer gewünschten Solldrehrichtung. Auch nach Beendigung der Einwirkung des Ausrichtungsänderungsdrehmomentes würde sich das Spritzgestänge ohne Gegenmaßnahmen weiterhin um die Drehachse drehen, da es bedingt durch das Massenträgheitsmoment seinen Drehimpuls beibehält. Um das Spritzgestänge wieder abzubremsen, muss daher ein Bremsdrehmoment entgegengesetzt zum vorherigen Ausrichtungsänderungsdrehmoment eingeleitet werden. Dieses Bremsdrehmoment wirkt der durch das Ausrichtungsänderungsdrehmoment angestoßenen Drehbewegung entgegen und dämpft somit das System aus um den zentralen Punkt drehbar aufgehängtem Spritzgestänge.

Bisher werden zur Aufbringung des Bremsdrehmoments für gewöhnlich mechanische Dämpfer verwendet, die zwischen Trägerfahrzeug und Spritzgestänge angebracht sind. Dreht sich das Trägerfahrzeug beispielsweise aufgrund von Unebenheiten um die Drehachse und das Spritzgestänge steht still, entsteht eine Relativdrehung zwischen Trägerfahrzeug und Spritzgestänge. Ein mechanischer Dämpfer, der zwischen Trägerfahrzeug und Spritzgestänge angebracht ist, würde dieser Relativdrehung entgegengesetzt wirken und somit ein um die Drehachse wirkendes Drehmoment auf das Spritzgestänge übertragen, wodurch eine Kopplung zwischen Trägerfahrzeug und Spritzgestänge besteht.

Diese Kopplung besteht gleichermaßen, wenn als Basis für eine Regelung des Drehmoments ein Messsystem verwendet wird, welches einen Relativwinkel und/oder eine Relativdrehung zwischen Trägerfahrzeug und Spritzgestänge misst.

Darüber hinaus sind Messsysteme bekannt, die am Spritzgestänge angeordnete Neigungssensoren verwenden, um die Lage des Spritzgestänges zu bestimmen. Durch zeitliche Ableitung der Neigung kann die Drehgeschwindigkeit des Spritzgestänges unabhängig vom Trägerfahrzeug erhalten werden. Neigungssensoren liefern jedoch bei Querbeschleunigungen, wie sie beispielsweise bei Kurvenfahrt auftreten, eine fehlerhafte Neigung. Somit wird auch eine fehlerhafte Drehgeschwindigkeit berechnet.

Ein Spritzgestänge, welches über einen aus Segmenten zusammengesetzten Ausleger verfügt, ist aus dem Stand der Technik bereits bekannt. So wird in der DE 32 02 569 A1 eine Verteilermaschine offenbart, bei der einzelne Segmente miteinander verbunden sind und die Bewegung der einzelnen Segmente passiv erfolgt. Für diesen Mechanismus ist ein stützendes Element auf der Außenseite eines jeden Auslegers notwendig, um den Schwenkvorgang zu ermöglichen. Zur Vermeidung von Ertragseinbußen ist es jedoch wünschenswert, ein Anpassen der einzelnen Segmente hinsichtlich unterschiedlicher Bodenkonturen zu erreichen, ohne mit dem Boden in direktem Kontakt zu stehen.

Weiterhin wird in der DE 18 33 453 U ein Spritzgestänge offenbart, welches Düsenbäume umfasst, die an einem Ausleger mittels elastischer Elemente angeordnet sind. Durch die elastischen Elemente können sich die Düsenbäume auch nach einem Schwenkvorgang des Auslegers in einer vertikalen Position wiederfinden. Da der Ausleger gemäß diesem Dokument nur um eine Achse schwenkbar angeordnet ist, besitzt das Spritzgestänge lediglich eine eingeschränkte Flexibilität. Aufgrund der hohen Unregelmäßigkeit von in der Praxis auftretenden Bodenstrukturen sind Spritzgestänge mit einer größeren Flexibilität wünschenswert, um eine gleichmäßige Verteilung der Spritzflüssigkeit auf den Untergrund zu gewährleisten.

Durch DE 10 2007 025 751 A1 ist eine Ausbringvorrichtung zum Ausbringen von flüssigen und/oder festen Wirkstoffen bekannt. Die Ausbringungsvorrichtung umfasst ein an einem selbstfahrenden oder gezogenen Fahrzeug angeordnetes, ungefähr parallel zu einer Fahrtrichtung um einen Aufhängepunkt schwenkbar gelagertes Ausbringgestänge. Das Ausbringungsgestänge besteht aus einem Mittelteil und seitlichen Auslegerarmen. Der Mittelteil ist über wenigstens eine regelbare Stelleinrichtung mit einem Rahmenabschnitt des Fahrzeuges gekoppelt. Die Stelleinrichtung leitet eine definierte Stellkraft und/oder ein definiertes Stellmoment zwischen dem Mittelteil und dem Rahmenabschnitt zur Verschwenkung des Ausbringgestänges relativ zum Rahmenabschnitt ein. Die Einleitung erfolgt unabhängig von Störmomenten, die aus Fahrzeugbewegungen resultieren.

Durch FR 2 779 031 A1 ist eine auch als begleitend bezeichnete, automatisierte Ausbringvorrichtung zum Ausbringen von flüssigen und/oder festen Wirkstoffen bekannt. Die Ausbringungsvorrichtung umfasst ein an einem selbstfahrenden oder gezogenen Fahrzeug angeordnetes, ungefähr parallel zu einer Fahrtrichtung um einen Aufhängepunkt schwenkbar gelagertes Ausbringgestänge. Das Ausbringungsgestänge besteht aus einem Mittelteil und seitlichen Auslegerarmen. Der Mittelteil ist über wenigstens eine regelbare Stelleinrichtung mit einem Rahmenabschnitt des Fahrzeuges gekoppelt. Die Stelleinrichtung leitet über mindestens zwei Angriffspunkte mindestens zwei Stellkräfte zwischen dem Mittelteil und dem Rahmenabschnitt zur Verschwenkung des Ausbringgestänges innerhalb einer vertikalen Ebene relativ zum Rahmenabschnitt ein. Die Einleitung erfolgt unter Überwindung der Rotationsträgheit des Ausbringgestänges unter gleichzeitiger Abschwächung störender Bewegungen dessen Schwerpunkts. Dabei wird der Schwenkpunkt innerhalb der vertikalen Ebene quer zur Fahrtrichtung verschoben. Eine Regelung führt das Ausbringgestänge nach. Die Stelleinrichtung kann beispielsweise als eine Schraubspindel oder hydraulisch ausgeführt sein.

Durch FR 2 270 774 A1 ist eine Ausbringvorrichtung zum Ausbringen von flüssigen und/oder festen Wirkstoffen bekannt. Die Ausbringungsvorrichtung umfasst ein an einem selbstfahrenden oder gezogenen Fahrzeug angeordnetes, ungefähr parallel zu einer Fahrtrichtung gelagertes Ausbringgestänge. Das Ausbringungsgestänge, bestehend aus einem Mittelteil und seitlichen Auslegerarmen, ist vermittels zweier Zapfen mit einem vertikalen Zylinder verbunden, der an einem Aufhängepunkt eines Rahmenabschnitts um eine Achse parallel zur Fahrtrichtung schwenkbar angeordnet ist. Das gegenüberliegende Ende des vertikalen Zylinders ist zwischen zwei sich gegen den Rahmenabschnitt abstützenden, horizontalen Zylindern geführt. Durch Betätigung der horizontalen Zylinder kann der vertikale Zylinder und damit das Ausbringungsgestänge parallel zum Boden ausgerichtet werden. Die Ausbringungsvorrichtung sieht zwei Betriebsmodi vor. Ein Betriebsmodus sieht eine Ausrichtung des Ausbringungsgestänges durch eine Höhenverstellung des vertikalen Zylinders und durch seitliches Neigen des vertikalen Zylinders vermittels der horizontalen Zylinder vor. Ein anderer Betriebsmodus sieht auf holperigem Gelände die Entfernung des unteren Zapfens vor, so dass das Ausbringungsgestänge frei pendeln kann.

Durch DE 41 40 254 A1 ist eine ultraschallsensorgesteuerte Höhen- und Lagesteuerung für eine Ausbringvorrichtung zum Ausbringen von flüssigen und/oder festen Wirkstoffen bekannt.

Durch EP 1 444 894 A1 ist ein Roll-Steuersvstem zur Steuerung einer Roll-Position eines Spritzaestänaes bekannt. Der Roll-Steuermechanismus kann auf Grundlage eines zugeführten Roll-Steuersignals eine Drehung der Ausleger relativ zum Trägerrahmen bewirken. Die Roll-Steuersignale können mittels Abstandsmessvorrichtungen und Ultraschall-Echosensoren gewonnen werden.

Durch EP 2 591 657 A1 ist eine Ausbringvorrichtung zum Ausbringen von flüssigen und/oder festen Wirkstoffen bekannt, wobei der Mittelteil des Ausbringgestänges über eine regelbare Stelleinrichtung mit einem Aufbau- oder Rahmenabschnitt und/oder mit einem starr oder beweglich gelagerten Stützabschnitt des Fahrzeugs gekoppelt ist. Die Stelleinrichtung umfasst zwei Betriebsmodi.

Durch WO 2004/041446 A1 ist bekannt, bei einer Ausbringvorrichtung zum Ausbringen von flüssigen und/oder festen Wirkstoffen harmonische Kopplungen zu vermeiden, indem Eigenresonanzfrequenzen der Auslegerarme eines Ausbringgestänges sowohl im leeren Zustand, als auch im vollen Zustand der Leitungen, sowie im Sprühbetrieb, die Resonanzfrequenz einer Drehschwingung des pendelnd aufgehängten Ausbringgestänges, die Resonanzfrequenz einer Federung des Fahrzeugs, an dem die Ausbringungsvorrichtung befestigt ist, der Resonanzfrequenz schwappenden Wirkstoffs in einem hierfür vorgesehenen Tank, sowie der Resonanzfrequenz einer Wirkstoffpumpe voneinander unabhängig sind. Hierzu kann die Länge der Auslegerarme verstellbar sein.

Durch EP 0 157 592 A2 sind Ausbringvorrichtungen zum Ausbringen von flüssigen und/oder festen Wirkstoffen bekannt. Eine erste Ausbringvorrichtung sieht eine frei schwingende Aufhängung eines Ausbringgestänges vor, wobei von Zeit zu Zeit Korrekturvorgänge stattfinden, in denen entsprechend eines vorgegebenen Abstands zwischen den Auslegerarmen und dem Boden die Höhe des Ausbringgestänges über dem Boden nachgeregelt wird. Eine zweite Ausbringvorrichtung sieht eine feste Ausrichtung des Ausbringgestänges vor, nach und während aufeinander folgenden Korrekturvorgängen vor, in denen entsprechend eines vorgegebenen Abstands zwischen den Auslegerarmen und dem Boden die Höhe des Ausbringgestänges über dem Boden nachgeregelt wird. Eine dritte Ausbringvorrichtung sieht vor, das Ausbringgestänge passiv aufzuhängen und die passive Aufhängung zumindest hinsichtlich einer Aufhängungseigenschaft verändern zu können, um eine kontinuierliche Änderung der Ausrichtung des Ausbringgestänges zu bewirken. Dabei erfolgt die kontinuierliche Änderung langsamer als die Selbststabilisierung der passiven Aufhängung.

Aufgabe der Erfindung ist eine Vorrichtung zum Ausbringen von flüssigen und/oder festen Wirkstoffen mit einem Trägerfahrzeug und mindestens einem zumindest um eine vorzugsweise parallel zu einer Längsachse des Trägerfahrzeugs verlaufende Drehachse schwenkbar angeordneten Gestänge mit beidseits des Trägerfahrzeugs abstehenden Auslegern, wie beispielsweise eine Feldspritze, zu entwickeln, welche auch bei unebenen Böden und sich bewegendem oder wankendem Trägerfahrzeug eine möglichst exakte Beibehaltung der Abstände der Ausleger gegenüber der Bodenoberfläche ermöglicht, sowie ein Verfahren zur Steuerung einer solchen Vorrichtung anzugeben, mit dessen Hilfe auch bei unebenen Böden und sich bewegendem oder wankendem Trägerfahrzeug eine möglichst exakte Beibehaltung der Abstände der Ausleger gegenüber der Bodenoberfläche ermöglicht wird.

Die Aufgabe wird jeweils gelöst durch die Merkmale der unabhängigen Ansprüche. Merkmale vorteilhafter Weiterbildungen der Erfindung ergeben sich aus den abhängigen Ansprüchen, dem nachfolgenden allgemeinen Beschreibungsteil, der Zeichnungen sowie dem zugehörigen Figurenbeschreibungsteil.

Ein erster Gegenstand der Erfindung betrifft demnach eine Vorrichtung zum Ausbringen von flüssigen und/oder festen Wirkstoffen. Die Vorrichtung umfasst:
- ein Trägerfahrzeug,
- mindestens ein zumindest um eine Drehachse schwenkbar angeordnetes Gestänge,
- mindestens eine Sensoranordnung zur Erfassung einer Drehgeschwindigkeit und/oder einer Drehlage des Gestänges um die Drehachse in Bezug auf eine Referenzebene und/oder in Bezug auf eine Bodenoberfläche,
- eine Ausgangssignale der mindestens einen Sensoranordnung zu Steuerungssignalen verarbeitende Regelungseinrichtung, die das Spritzgestänge mittels wenigstens zwei gekoppelter Regelkreise, umfassend einen inneren Regelkreis und einen äußeren Regelkreis, in seiner Drehlage und/oder Drehgeschwindigkeit beeinflusst bzw. steuert,
- wenigstens einen in Abhängigkeit von Steuerungssignalen der Regelungseinrichtung die momentane Drehlage des Gestänges um die Drehachse beeinflussenden Aktor,
- wobei in dem äußeren Regelkreis aus den Ausgangssignalen der mindestens
   einen Sensoranordnung durch die Regelungseinrichtung ein Sollwert und/oder Solldrehmoment für den wenigstens einen Aktor generierbar ist,
- und wobei in dem inneren Regelkreis ein das Spritzgestänge bewegendes
   und/oder beeinflussendes tatsächliches Drehmoment und/oder Istwert, der auf Aktorauslenkungen und/oder Steuersignalen des wenigstens einen Aktors basiert, erfassbar ist und zur Generierung eines Korrekturwertes für die Erreichung des Solldrehmomentes und/oder des Sollwertes verwendet wird, wobei der innere Regelkreis anhand der Sollwertvorgabe des äußeren Regelkreises das Ist-Drehmoment bzw. die Ist-Stellkraft, welche durch den wenigstens einen Aktor tatsächlich in das Spritzgestänge eingeleitet werden, regelt.

Bei dieser Vorrichtung kann der äußere Regelkreis insbesondere aus Sensordaten der wenigstens einen Sensoranordnung einen Sollwert für die Ansteuerung des wenigstens einen Aktors generieren, der eine Sollpositon des Spritzgestänges vorgibt. Zudem kann der innere Regelkreis typischerweise weitere Sensordaten berücksichtigen, die im unmittelbaren Zusammenhang mit Steuersignalen des wenigstens einen Aktors und/oder dessen erfasster Wechselwirkung mit dem beweglich aufgehängten Spritzgestänge gewonnen werden. Diese weiteren Sensordaten können je nach Aufbau der Vorrichtung insbesondere durch ein vom Aktor in das Gestänge eingeleitetes Verstelldrehmoment charakterisiert und/oder abgeleitet sein, das bspw. mit weiteren Sensoren gemessen oder auch aus der Wechselwirkung des Aktors mit dem Spritzgestänge abgeleitet werden kann.

So kann innerhalb des äußeren Regelkreises bspw. anhand der Informationen der Lagesensoren (z.B. Ultraschallsensoren) und/oder Drehratensensoren und/oder Beschleunigungssensoren und/oder Winkelsensoren usw. das notwendige Drehmoment bzw. die notwendige Stellkraft ermittelt werden, die notwendig ist, um das Gestänge in einer Zielposition zu halten oder in eine Zielposition zu bringen. Dieses notwendige Drehmoment bzw. diese notwendige Stellkraft muss typischerweise vom wenigstens einen Aktor bzw. von zwei oder mehr vorhandenen Aktoren aufgebracht werden, gebildet bspw. durch einen Hydraulik- oder Pneumatikzylinder oder elektrisch arbeitende Antriebe oder auch durch mehrere solche Stellzylinder.

Dagegen regelt der innere Regelkreis das Ist-Drehmoment bzw. die Ist-Stellkraft, welche durch das Stellelement bzw. den Aktor oder die Aktoren tatsächlich in das Gestänge eingeleitet werden, anhand der Sollwertvorgabe (Solldrehmoment, oder Sollstellkraft) des äußeren Regelkreises. Im inneren Regelkreis kann das Ist-Drehmoment bspw. aus einem Produkt aus einem erfassten Differenzdruck bei pneumatischen Stellelementen und einer gegebenen Hebellänge zum Drehpunkt des Spritzgestänges ermittelt werden. Dieses Produkt charakterisiert das erforderliche Drehmoment, das in das Spritzgestänge einzuleiten ist. Gleichermaßen kann das Ist-Drehmoment auch aus einem Produkt aus dem Federweg bei hydraulischer Ansteuerung und der gegebenen Hebellänge zum Drehpunkt des Spritzgestänges hergeleitet werden.

Befindet sich das Spritzgestänge in einer gewünschten Lage, ist die entsprechende Sollwertvorgabe des äußeren Regelkreises gleich Null. In diesem Fall regelt der innere Regelkreis das Stellelement bzw. den Aktor (oder die Aktoren) ebenfalls so aus, dass die resultierende Stellkraft Null oder das resultierende Drehmoment Null ist. In diesem Fall ergibt sich somit keine Beeinflussung des Gestänges durch das Stellelement, auch wenn das Trägerfahrzeug über unebenes Gelände fährt und dadurch Wankbewegungen ausführt.

Die Stellverbindung zwischen dem wenigstens einen Aktor bzw. Stellelement und dem Spritzgestänge kann insbesondere eine federnde Lagerung vorsehen, wobei die Feder durch eine zwischen dem Stellglied und dem Spritzgestänge angeordnete mechanische Feder oder durch ein nachgiebiges Medium wie bspw. eine Elastomerverbindung o. dgl. im Stellglied selbst oder in dessen Lagerung ausgebildet sein kann. Die mechanische Verbindung kann bspw. das an dem Spritzgestänge in einem Langloch geführte Stellglied oder die Stellelementlagerung mit dem Spritzgestänge verbinden.

Auf eine derartige federnde Lagerung kann jedoch ggf. verzichtet werden, wenn als Aktor und/oder Aktoren mit fluidischen Druck, vorzugsweise pneumatischen Druck arbeitende Aktoren verwendet werden. In diesem Fall erfolgt die Dämpfung bzw. Federung ohne Einleitung einer Stellkraft durch die Kompression der der Luft in der/die Druckkammer des wenigstens einen Aktors.

Als Aktoren bzw. Stellelemente können insbesondere Linear- oder Drehantriebe eingesetzt werden, die mit fluidischem Druck arbeiten. Solche Aktoren können eine regelbare Stellverbindung zwischen dem Trägerfahrzeug und dem schwenkbaren Gestänge herstellen, wobei der wenigstens eine Linear- oder Drehantrieb für jede der beiden Verstellrichtungen des Gestänges jeweils eine mit fluidischem Stelldruck beaufschlagbare aktive Druckseite aufweist. Außerdem können die Aktoren in einer Weise ausgelegt sein, dass sich bei gegenüber dem Trägerfahrzeug ruhendem oder geringfügig bewegendem Gestänge ein ungefähr gleiches Druckniveau und/oder Kraftniveau in den aktiven Druckseiten zweier gegensinnig arbeitender Linear- oder Drehantrieb bzw. eines doppelt wirkenden Linear- oder Drehantriebs einstellt, und dass bei gegenüber dem Trägerfahrzeug verstelltem Gestänge ein definierter Differenzdruck und/oder ein definiertes Kraftniveau zwischen den aktiven Druckseiten der beiden gegensinnig arbeitenden Linear- oder Drehantriebe bzw. des doppelt wirkenden Linear- oder Drehantriebs einstellbar ist.

Hierbei wird vorzugsweise ein Zusammenhang zwischen den gemessenen Drehwinkeln bzw. der Drehlage des Gestänges und der Drehgeschwindigkeit hergestellt, indem ein Messwert der als Drehgeschwindigkeit bezeichneten Drehrate zeitlich integriert wird, woraus sich ein die Drehlage des Gestänges in Bezug auf die Referenzebene repräsentierender Drehwinkel ermitteln lässt. Störungen durch Bewegungen des Trägerfahrzeuges oder durch translatorische Beschleunigungen aller Art haben hierbei keinen Einfluss auf die Berechnung, wogegen Messfehler ebenfalls integriert werden und eine Winkeldrift des Drehwinkels verursachen. Eine Messung der Drehlage in Bezug auf die Referenzebene, beispielsweise durch eine Messung der Relativdrehung zwischen Trägerfahrzeug und Gestänge oder eine Messung eines Neigungswinkels zur Erdbeschleunigung weist zwar den Nachteil des Einflusses von Störungen durch Drehbewegungen des Trägerfahrzeuges oder durch translatorische Beschleunigungen, wie sie etwa bei Kurvenfahrt auftreten auf, dem jedoch der Vorteil gegenübersteht, dass diese Art der Erfassung der Drehlage keiner Winkeldrift unterliegt.

Diese Messwerte können am sinnvollsten dadurch gewonnen werden, dass bei der erfindungsgemäßen Vorrichtung die mindestens eine Sensoranordnung zur Erfassung der Drehgeschwindigkeit und/oder Drehlage des Gestänges um die Drehachse in Bezug auf die Referenzebene durch mindestens einen am Gestänge angeordneten Drehraten-, Drehwinkelgeschwindigkeits- und/oder Drehbeschleunigungssensor gebildet ist. Wahlweise kann die Sensoranordnung auch am Trägerfahrzeug angebracht sein. Auch die Verwendung von zwei solchen Sensoranordnungen am Gestänge und am Trägerfahrzeug ist denkbar.

Die erfindungsgemäße Vorrichtung kann vorsehen, dass das Spritzgestänge an einem Widerlagerteil pendelnd um eine Achse gelagert ist, wobei ein Drehratensensor (Gyroskop) direkt auf dem und/oder am Spritzgestänge und/oder am Trägerfahrzeug montiert ist. Mit dem Gyroskop bzw. der erwähnten Sensoranordnung werden die aktuelle Lage und die aktuellen Bewegungen des Gestänges in Bezug auf eine Referenzebene ("künstlicher Horizont"), die unabhängig vom Trägerfahrzeug sind, ermittelt. Damit kann erreicht werden, dass Drehbewegungen oder Wankbewegungen des Trägerfahrzeuges (Selbstfahrende- oder gezogene Feldspritze) zunächst keinen direkten Einfluss auf das Gestänge haben, da die durch das Gyroskop ermittelten Messwerte sich auf die Drehbewegungen des Gestänges in Bezug auf die Erdoberfläche beziehen. Die Sensoranordnung gewinnt auf diese Weise absolute Lagewerte, die sich hervorragend dazu eignen, unerwünschte Pendel- und/oder Auslenkbewegungen des Gestänges zu erfassen und entweder auszugleichen oder zu dämpfen.

Der wenigstens eine Aktor kann bspw. durch wenigstens einen doppelt wirkenden, mit fluidischem Druck arbeitenden Linearantrieb gebildet sein, der eine Stellverbindung zwischen dem Trägerfahrzeug und dem schwenkbaren Gestänge herstellt. Hierbei trennt ein mit dem Gestänge gekoppelter, in einem Zylinderraum zwischen zwei Endlagen beweglicher Kolben des Linearantriebs zwei Druckräume voneinander, welche für jede der beiden Verstellrichtungen des Gestänges jeweils mit fluidischem Stelldruck beaufschlagbar sind. In diesen beiden Druckräumen herrscht bei gegenüber dem Trägerfahrzeug ruhendem oder sich geringfügig bewegendem Gestänge ein ungefähr gleiches Druckniveau und/oder Kraftniveau, was vorzugsweise mittels geeigneter Drucksensoren erfasst und in der Regelschaltung ausgewertet wird, zusammen mit den Messwerten der Sensoranordnung bzw. des Drehratensensors oder Gyroskops. Soll sich das Gestänge dagegen relativ zum Trägerfahrzeug bewegen, wird der doppelt wirkende Zylinder mit Stelldruck beaufschlagt, so dass bei gegenüber dem Trägerfahrzeug verstelltem oder zu verstellendem Gestänge ein definierter Differenzdruck und/oder eine definierte Differenzkraft zwischen den beiden Druckräumen des doppelt wirkenden Linearantriebs einstellbar ist.

Die vorgeschlagene Spritzgestängeregelung bei pendelnden Aufhängungen kann somit bspw. mit wenigstens einem Zylinder erfolgen, mit dem jeweils das Spritzgestänge in Bezug auf den Pendelweg verstellt werden kann. Der Zylinder ist zum einen mit dem Spritzgestänge verbunden und zum anderen mit dem Widerlagerteil. Das Widerlagerteil kann auch Teil eines Fahrzeugs, beispielsweise ein Rahmenteil einer Pflanzenschutzspritze sein.

Eine alternative Ausführungsvariante der erfindungsgemäßen Vorrichtung kann vorsehen, dass der erwähnte Aktor durch wenigstens zwei gegensinnig und jeweils mit fluidischem Druck arbeitende Linearantriebe gebildet ist, die eine Stellverbindung zwischen dem Trägerfahrzeug und dem schwenkbaren Gestänge herstellen, wobei jeder der beiden Linearantriebe jeweils einen Druckraum aufweist, und wobei jeweils einer der beiden Linearantriebe für eine vorgegebene Verstellrichtung des Gestänges mit fluidischem Stelldruck beaufschlagbar ist. Auch bei dieser Variante herrscht in den beiden Druckräumen der beiden Linearantriebe bei gegenüber dem Trägerfahrzeug ruhendem oder sich geringfügig bewegendem Gestänge ein ungefähr gleiches Druckniveau. Dagegen ist bei gegenüber dem Trägerfahrzeug verstelltem oder zu verstellendem Gestänge ein definierter Differenzdruck zwischen den beiden Druckräumen der beiden Linearantriebe einstellbar.

Die genannten Zylinder, d.h. der wenigstens eine doppelt wirkende Zylinder oder die wenigstens zwei einfach oder doppelt wirkenden Zylinder, können wahlweise mit hydraulischem oder pneumatischem Druck beaufschlagt und betrieben werden. Ggf. sind auch hydropneumatische Stelleinrichtungen denkbar. Auch elektrisch bzw. elektromotorisch arbeitende Linearantriebe sind denkbar.

Als wesentliche Unterschiede der erfindungsgemäßen Vorrichtung zum Ausbringen von flüssigen und/oder festen Wirkstoffen gegenüber den bekannten Spritzvorrichtung können insbesondere die folgenden Aspekte genannt werden:
Die Erfindung liefert ein Spritzgestänge, welches drehbar oder pendelnd, um eine Drehachse annähernd parallel zur Fahrzeugachse an einem Tragerahmen aufgehängt ist. Zusätzlich ist zwischen dem Spritzgestänge und dem Tragerahmen wenigstens ein, vorzugsweise pneumatisches Stellelement (evtl. auch hydraulisch) angeordnet. In den beiden Zylinderkammern werden jeweils die Drücke ermittelt, bspw. mittels geeigneter Differenzdrucksensoren oder auch mehreren Drucksensoren. Alternativ hierzu können auch Dehnungsmessstreifen auf den Kolbenstangen oder an Verbindungsstellen o. dgl. eingesetzt werden.

In Phasen, in denen keine Verstellung des Gestänges notwendig ist, wird der Differenzdruck bzw. die resultierende Differenzkraft ungefähr auf Null geregelt, wodurch keine oder keine nennenswerte Kraft in das Gestänge eingeleitet wird. Ist dagegen aufgrund der Fahrsituation der Vorrichtung, bspw. in unebenem Gelände oder am Hang, eine Verstellung des Gestänges um seine Drehachse notwendig, wird auf einen definierten Differenzdruck (Differenzkraft) geregelt. Die Ermittlung der Drehgeschwindigkeit kann insbesondere über das Gyroskop erfolgen. Durch Integration der Drehgeschwindigkeit kann der Verdrehwinkel errechnet werden.

Darüber hinaus werden geringe Dreh- bzw. Wankbewegungen zunächst nicht aktiv nachgeregelt, wobei hierbei die Dämpfung des Gestänges durch Luftkompression in dem wenigstens einen Pneumatikzylinder erfolgen kann. Wahlweise kann die Verbindung zwischen Zylinder und Gestänge auch mittels eines Elastomers oder mit einem Langloch mit zugeordneter Feder oder Dämpfungselement erfolgen.

Die erfindungsgemäße Vorrichtung ermöglicht eine exakte und sichere Spritzgestängeführung über einem Pflanzenbestand oder einem Feld, wobei das Spritzgestänge bei Bedarf in sehr geringem Abstand zum Boden oder zum Pflanzenbestand geführt werden kann. Eine exakte Anpassung des Gestänges an die Feldkontur ist durch die weitgehende Entkoppelung des Gestänges von der Aufhängung möglich. Negative Wind- und Thermikeinflüsse auf das Abdriftverhalten des Spritzmittels können auf diese Weise minimiert werden. Die erfindungsgemäße Vorrichtung liefert eine sehr reibungsarme Lagerung des Spritzgestänges, das bspw. mittels Kugellagern nahe an seinem Schwerpunkt aufgehängt ist, so dass Zentrifugalkräfte, wie sie z.B. bei Kurvenfahrten auftreten, nahezu keinen Einfluss auf die Gestängelage haben. Um das Gestänge an die jeweilige Geländekontur anpassen zu können, kommt eine Regelung mit äußeren und inneren Regelkreisen zum Einsatz. Auf diese Weise können gezielt Kräfte in das Gestänge eingeleitet werden, ohne dass eine ständige kraftschlüssige Verbindung zwischen Stellelementen und Spritzgestänge erforderlich ist. Dies kann dadurch erreicht werden, dass das wenigstens eine Verstellelement den Bewegungen des Trägerfahrzeuges in Echtzeit oder nahezu in Echtzeit folgt und somit keine störenden Kräfte in das Gestänge eingeleitet werden. Bei einer notwendigen Hanganpassung des Gestänges, das hierzu gegenüber dem Trägerfahrzeug verdreht werden muss, drückt das Stellelement in einem definiert berechneten Weg auf ein Elastomerelement oder eine federnd aufgehängte Koppelstelle o. dgl. und beschleunigt das Gestänge rotatorisch. Kurz vor Erreichen der gewünschten Zielposition wird ein gegenüberliegendes Elastomerelement oder ein gegenüberliegendes Federelement gedrückt und die rotatorische Bewegung abgebremst. Während dieser Verstellung wird ständig die Lage des Stellelements - z.B. eines doppelt wirkenden Stellzylinders - gemessen und geregelt, so dass Wankbewegungen der Maschine auch während der Verstellung kompensiert werden können. Um diese schnellen Stellbewegungen durchführen zu können, kommen in den Steuerkreisen vorzugsweise schnell wirkende proportionale Hydraulikventile zum Einsatz, die mit der erfindungsgemäßen Regel- und Steuerungsschaltung kombiniert werden, wobei zusätzlich Sensordaten einer Gyroskopsensorik verarbeitet werden.

Wie oben bereits erwähnt, kann anstelle von zwei Pneumatik- oder Hydraulikzylindern auch ein doppelt wirkender Zylinder eingesetzt werden, vorzugsweise ein hydraulisch arbeitender Zylinder. So könnte ein Zylinder verwendet werden, der sowohl auf Kolbenboden- wie auch auf Kolbenstangenseite mit Druck beaufschlagt wird. Wiederum könnte auch hier wieder ein Differenzdruck zwischen Kolbenboden- und Kolbenstangenseite gemessen werden, wobei dieser aufgrund der verschiedenen Querschnitte auch in Nullstellung bereits einen Differenzdruck aufweisen kann. Überschreitet der gemessene Differenzdruck jedoch einen definierten Wert, kann das Gestänge wieder aktiv nachgeregelt werden. Hierbei wird das Gestänge vorzugsweise aufgrund der durch das Gyroskop vorgegebenen Werte auf einen bestimmten Differenzdruck geregelt.

Alternativ zur Differenzdruckmessung wäre auch vorstellbar, den wenigstens einen Zylinder mit einem Wegmesssystem zu versehen, so dass Bewegungen des Gestänges nicht über einen Differenzdruck, sondern über eine Längenänderung des Stellelementes ermittelt werden können. Überschreitet diese Längenänderung einen definierten Wert, kann das Gestänge wieder aktiv nachgeregelt werden, bzw. wird das Gestänge aufgrund der durch das Gyroskop vorgegebenen Werte auf eine bestimmte Länge Stellelementes geregelt.

Eine weitere Alternative zur Differenzdruckmessung wäre die Verwendung von wenigstens einem Dehnungsmessstreifen, welcher bspw. auf die Kolbenstange des wenigstens einen Stellelementes montiert wird. Findet keine Bewegung durch das Spritzgestänge statt, bzw. ist keine aktive Regelung erforderlich, wird vom Dehnungsmessstreifen keine bzw. nur eine geringe Zug- und/oder Druckkraft ermittelt. Wird eine definierte Zug- oder Druckkraft überschritten, kann das Gestänge wieder aktiv nachgeregelt werden, bzw. wird das Gestänge aufgrund der durch das Gyroskop vorgegebenen Werte auf eine bestimmte Zug- und/oder Druckkraft geregelt.

Zur Lösung der obigen Aufgabe schlägt die vorliegende Erfindung neben der oben beschriebenen Vorrichtung zum Ausbringen von festen und/oder flüssigen Wirkstoffen zudem ein Verfahren mit den Merkmalen des unabhängigen Anspruchs 9 vor. Dieses erfindungsgemäße Verfahren dient insbesondere der Steuerung einer Vorrichtung gemäß einer der zuvor beschriebenen Ausführungsvarianten und sieht eine Regelung der Drehlage des um eine Drehachse beweglich am Trägerfahrzeug angeordneten Gestänges vor, und zwar eine Regelung mittels eines mehrteiligen Regelkreises, der zumindest eines äußeren und einen inneren Regelkreis umfasst. Das Regelverfahren sieht eine Ansteuerung wenigstens eines Stellelements oder Aktors zur Verdrehung des Spritzgestänges um eine Drehachse vor,
- wobei eine Stellkraft oder ein Stellmoment bei ruhendem oder nur geringfügig aus einer Ruhelage bewegtem Gestänge minimal ist und der Aktor keine oder nur eine minimale Stellkraft zwischen Trägerfahrzeug und Gestänge aufbaut,
- und wobei bei einem zu verstellenden Gestänge ein definierbarer Differenzdruck und/oder Differenzkraft zwischen den beiden Druckräumen aufgebaut wird,
- wobei eine aktuelle Drehgeschwindigkeit und/oder Drehlage des Gestänges um die Drehachse in Bezug auf eine Referenzebene mittels mindestens einer Sensoranordnung ermittelt wird, die einen am Gestänge oder am Trägerfahrzeug angeordneten Drehraten-, Drehwinkelgeschwindigkeits- und/oder Drehbeschleunigungssensor und/oder Abstandssensoren zur Erfassung eines Bodenabstandes des Gestänges umfasst,
- wobei in dem äußeren Regelkreis aus den Ausgangssignalen der mindestens
   einen Sensoranordnung durch die Regelungseinrichtung ein Sollwert und/oder Solldrehmoment für den wenigstens einen Aktor generiert wird,
- und wobei in dem inneren Regelkreis ein das Spritzgestänge bewegendes
   und/oder beeinflussendes tatsächliches Drehmoment und/oder Istwert, der auf Aktorauslenkungen und/oder Steuersignalen des wenigstens einen Aktors basiert, erfassbar ist und zur Generierung eines Korrekturwertes für die Erreichung eines Solldrehmomentes und/oder Sollwertes verwendet wird.

Bei diesem Verfahren kann der äußere Regelkreis insbesondere aus Sensordaten der wenigstens einen Sensoranordnung einen Sollwert für die Ansteuerung des wenigstens einen Aktors generieren, der eine Sollpositon des Spritzgestänges vorgibt. Zudem kann der innere Regelkreis typischerweise weitere Sensordaten berücksichtigen, die im unmittelbaren Zusammenhang mit Steuersignalen des wenigstens einen Aktors und/oder dessen erfasster Wechselwirkung mit dem beweglich aufgehängten Spritzgestänge gewonnen werden. Diese weiteren Sensordaten können je nach Aufbau der Vorrichtung insbesondere durch ein vom Aktor in das Gestänge eingeleitetes Verstelldrehmoment charakterisiert und/oder abgeleitet sein, das bspw. mit weiteren Sensoren gemessen oder auch aus der Wechselwirkung des Aktors mit dem Spritzgestänge abgeleitet werden kann.

So kann innerhalb des äußeren Regelkreises bspw. anhand der Informationen der Lagesensoren (z.B. Ultraschallsensoren) und/oder Drehratensensoren und/oder Beschleunigungssensoren und/oder Winkelsensoren usw. das notwendige Drehmoment bzw. die notwendige Stellkraft ermittelt werden, die notwendig ist, um das Gestänge in einer Zielposition zu halten oder in eine Zielposition zu bringen. Dieses notwendige Drehmoment bzw. diese notwendige Stellkraft muss typischerweise vom wenigstens einen Aktor bzw. von zwei oder mehr vorhandenen Aktoren aufgebracht werden, gebildet bspw. durch einen Hydraulik- oder Pneumatikzylinder oder auch durch mehrere solche Stellzylinder.

Dagegen regelt der innere Regelkreis das Ist-Drehmoment bzw. die Ist-Stellkraft, welche durch das Stellelement bzw. den Aktor oder die Aktoren tatsächlich in das Gestänge eingeleitet werden, anhand der Sollwertvorgabe (Solldrehmoment, oder Sollstellkraft) des äußeren Regelkreises. Im inneren Regelkreis kann das Ist-Drehmoment bspw. aus einem Produkt aus einem erfassten Differenzdruck bei pneumatischen Stellelementen und einer gegebenen Hebellänge zum Drehpunkt des Spritzgestänges ermittelt werden. Dieses Produkt charakterisiert das erforderliche Drehmoment, das in das Spritzgestänge einzuleiten ist. Gleichermaßen kann das Ist-Drehmoment auch aus einem Produkt aus dem Federweg bei hydraulischer Ansteuerung und der gegebenen Hebellänge zum Drehpunkt des Spritzgestänges hergeleitet werden.

Befindet sich das Spritzgestänge in einer gewünschten Lage, ist die entsprechende Sollwertvorgabe des äußeren Regelkreises gleich Null. In diesem Fall regelt der innere Regelkreis das Stellelement bzw. den Aktor (oder die Aktoren) ebenfalls so aus, dass die resultierende Stellkraft Null oder das resultierende Drehmoment Null ist. In diesem Fall ergibt sich somit keine Beeinflussung des Gestänges durch das Stellelement, auch wenn das Trägerfahrzeug über unebenes Gelände fährt und dadurch Wankbewegungen ausführt.

Vorzugsweise sind die Regelkreise in einer Weise miteinander verbunden oder verschaltet, dass der innere Regelkreis vom äußeren Regelkreis übersteuert wird, da der äußere Regelkreis die gewünschten Verschwenkbewegungen des Spritzgestänges umsetzt, während der innere Regelkreis in erster Linie die Beeinflussung des Gestänges durch unerwünschte Stellkräfte verhindern soll.

Es sei an dieser Stelle ergänzend betont, dass alle Erfindungsaspekte, die weiter oben anhand der Vorrichtung zum Ausbringen von flüssigen und/oder festen Wirkstoffen und deren Ausführungsvarianten erläutert wurden, gleichermaßen für das erfindungsgemäße Steuerungs- und/oder Regelverfahren zur Positionseinstellung des Spritzgestänges der beschriebenen Vorrichtung gelten sollen.

Bei einer Variante des Verfahrens werden sowohl die Messdaten der wenigstens einen Sensoranordnung als auch die Differenzdrücke zwischen den beiden Druckräumen des wenigstens einen Aktors zur Ermittlung einer aktuellen Drehlage und/oder einer Soll-Drehlage zwischen Gestänge und Trägerfahrzeug herangezogen und von einer Regelungseinrichtung verarbeitet, welche auf Basis dieser Messdaten den wenigstens einen Aktor ansteuert, der die Gestängelage in der gewünschten Weise ändert, so dass das Gestänge insbesondere seine horizontale Lage bei ebenem Untergrund bzw. seine Parallellage zu einem geneigten Untergrund beibehält bzw. einnimmt.

Ergänzend sei an dieser Stelle darauf hingewiesen, dass es sich bei der erfindungsgemäßen Verteilvorrichtung vorzugsweise um eine landwirtschaftliche Verteilmaschine handeln kann, insbesondere einer Feldspritze zum Ausbringen von flüssigen Pflanzenschutz- und oder Düngemitteln, ggf. auch von festen Wirkstoffen, die bspw. in zerstäubter Form ausgebracht werden können. Die Feldspritze kann bspw. als selbstfahrende oder als eine an einem Zugfahrzeug angebrachte bzw. angehängte Maschine ausgebildet sein. Die Feldspritze besteht normalerweise im Wesentlichen aus einem Rahmen zum Tragen der einzelnen Baugruppen, einem Vorratsbehälter, zum Mitführen der auszubringenden Spritzflüssigkeit, einer Rechnereinheit zum Steuern der einzelnen Maschinenelemente, sowie aus einem gegenüber dem Rahmen, mittels Stellelementen höhenverstellbaren und um eine horizontale Längsachse verdrehbaren, sich quer zur Fahrrichtung erstreckenden Verteilvorrichtung bzw. Spritzgestänge. An der Verteilvorrichtung sind in regelmäßigen Abständen voneinander eine Mehrzahl von sog. Düsenstöcken angebracht. An diesen ist wiederum wenigstens eine Spritzdüse, in der Regel jedoch mehrere, zum Verteilen der Pflanzenschutz- und/oder Düngerflüssigkeit montiert. Die Spritzdüsen erzeugen hierzu einen zum Pflanzenbestand hingerichteten Sprühkegel. Die Ansteuerung der Stellelemente zur Höheneinstellung sowie zur Ansteuerung der gewünschten Düsenstöcke bzw. Spritzdüsen erfolgt insbesondere mittels in einem Rechnersystem hinterlegten Ausbringmuster bzw. Ausbringprofilen.

Zur Erfassung der Drehgeschwindigkeit kann bei der erfindungsgemäßen Vorrichtung vorzugsweise ein geeigneter Drehratensensor oder auch mehrere Drehratensensoren eingesetzt werden, der/die direkt auf dem Gestänge montiert ist. Drehbewegungen des Trägerfahrzeuges haben somit keinen Einfluss auf die Bestimmung der Drehgeschwindigkeit des Gestänges. Ein der Messgröße proportionales oder diese wiederspiegelndes Ausgangssignal eines Drehratensensors entspricht somit der Drehbewegung des Gestänges bezogen auf eine beliebige Referenzebene, beispielsweise bezogen auf die Erdoberfläche oder eine ein gemitteltes Bodenprofil wiederspiegelnde, langfristige Ausrichtung des Trägerfahrzeugs.

Diese Messgröße bzw. ein dieser Messgröße proportionales oder diese wiederspiegelndes, in die Steuerungssignale an den oder die Aktoren einfließende Eingangsgröße der Regelungseinrichtung dienendes Ausgangssignal eines Drehgeschwindigkeiten des Gestänges erfassenden Drehratensensors kann verwendet werden, um einen aktive Dämpfung des Gestänges in Form eines aktiv eingeleiteten Bremsmoments zu erhalten.

Alternativ oder zusätzlich kann die mindestens eine Sensoranordnung zur Erfassung einer Drehgeschwindigkeit des Gestänges um die Drehachse in Bezug auf eine Referenzebene mindestens einen am Trägerfahrzeug angeordneten Drehratensensor umfassen, um Drehgeschwindigkeiten des Trägerfahrzeugs wenigstens um dessen Längsachse und damit Störbewegungen darstellende Drehbewegungen des Trägerfahrzeugs zu messen. D.h. es kann wahlweise auch am Trägerfahrzeug ein zusätzlicher Drehratensensor eingesetzt werden, was einen Vergleich der Messwerte zur noch besseren Lage- und/oder Winkelbestimmung des Gestänges ermöglicht.

Zusätzlich kann die mindestens eine Sensoranordnung zur Erfassung einer Drehgeschwindigkeit des Gestänges um die Drehachse in Bezug auf eine Referenzebene hierbei mindestens einen die Relativdrehung zwischen Trägerfahrzeug und Gestänge erfassenden Drehwinkelsensor oder Drehwinkelgeschwindkeitssensor umfassen, so dass aus den beiden Messwerten Drehgeschwindigkeit des Trägerfahrzeugs in Bezug auf dessen Längsachse sowie Relativdrehung zwischen Trägerfahrzeug und Gestänge dann die absolute Drehgeschwindigkeit des Gestänges um die Drehachse ermittelt werden kann.

Alternativ oder zusätzlich zu einem Drehratensensor kann die mindestens eine Sensoranordnung zur Erfassung einer Drehgeschwindigkeit des Gestänges um die Drehachse in Bezug auf eine Referenzebene einen Drehbeschleunigungssensor umfassen. Durch zeitliche Integration dessen Ausgangssignals kann ein Maß für die Drehgeschwindigkeit gewonnen werden.

Zusammengefasst ist demnach ersichtlich, dass die Mittel zur Bestimmung einer Drehgeschwindigkeit des Gestänges um die Drehachse in Bezug auf eine Referenzebene einen oder mehrere am Gestänge angeordnete Inertialsensoren umfassen können.

Inertialsensoren dienen der Messung von Beschleunigungen und Drehraten. Durch Kombination mehrerer Inertialsensoren in einer auch als inertial measurement unit, IMU, bezeichneten inertialen Messeinheit können Beschleunigungen in bis zu sechs Freiheitsgraden, die ein starrer Körper aufweisen kann (drei translatorische und drei rotatorische Freiheitsgrade) gemessen werden. Eine IMU ist Hauptbestandteil eines auch als inertiales Navigationssystem bezeichneten Trägheitsnavigationssystems.

Beispielse für Inertialsensoren sind Beschleunigungssensoren und Drehratensensoren.

Ein Drehratensensor erfasst die Rotations- beziehungsweise Drehgeschwindigkeit eines Körpers um eine vorgegebene Dreh- oder Schwenkachse, wobei ein Ausgangssignal eines Drehratensensors einer erfassten Drehgeschwindigkeit vorzugsweise eindeutig proportional ist.

Durch Integration der Drehgeschwindigkeit über ein Zeitintervall lässt sich daraus ableiten, um welchen Winkel sich ein Körper innerhalb des Zeitintervalls gedreht hat. Die Drehraten um die drei Raumachsen werden als:
- Gierrate (Drehung um Hochachse, engl. yaw)
- Nickrate (Drehung um Querachse, engl. pitch)
- Wankrate (bei nicht landgestützten Fahrzeugen auch Rollrate (Drehung um Längsachse, engl. roll)
bezeichnet.

Das Messprinzip basiert im Wesentlichen auf zwei Messprinzipien, zum Einen der Corioliskraft, die auf ein mechanisch bewegtes System wirkt, und zum Anderen dem Sagnac-Effekt, der bei Licht beobachtet wird.

Beispiele für die Corioliskraft nutzende mechanische, bewegte Systeme sind:
- Focaultsches Pendel,
- Kreisekompass
- Dynamically Tuned Gyro (DTG), Messfehler <1 °/h
- Vibrationskreisel, Messfehler <10°/h
- Schwingkölbchen.

Beispiele für den Sagnac-Effekt nutzende optische Systeme sind:
- Ringlaser (RLG), Messfehler <0,001 °/h
- Faserkreisel (FOG), Messfehler <1 °/h

Inertiale Messeinheiten beinhalten in der Regel die folgenden Sensorarten:
- Drei orthogonal angeordnete Beschleunigungssensoren (auch als Translationssensoren bezeichnet) detektieren die lineare Beschleunigung in x- bzw. y-bzw. z-Achse. Daraus kann mit zweimaliger Integration die translatorische Bewegung berechnet werden.
- Drei orthogonal angeordnete Drehratensensoren (auch als Gyroskopische Sensoren bezeichnet) messen die Winkelgeschwindigkeit um die x- bzw. y- bzw. z-Achse. Daraus kann mit einfacher Integration die Rotationsbewegung berechnet werden.

Zur Bestimmung der Integrationskonstanten und/oder zur Verbesserung der Genauigkeit und/oder um eine Drift der Sensoren zu korrigieren, können zusätzlich beispielsweise Magnetfeldsensoren, wie etwa Kompasssensoren, und/oder zum Empfang von Signalen eines auch als Global Navigation Satellite System, GNSS, bezeichneten, bestehenden und/oder künftigen globalen Navigationssatellitensystems, wie beispielsweise:
- GPS (Global Positioning System) der Vereinigten Staaten von Amerika, und/oder
- GLONASS (GLObal NAvigation Satellite System) der Russischen Föderation, und/oder
- Galileo der Europäischen Union, und/oder
- Beidou der Volksrepublik China
vorgesehen sein.

Die mindestens eine Sensoranordnung zur Erfassung einer Drehlage des Gestänges um die Drehachse in Bezug auf die Referenzebene kann mindestens einen eine Relativdrehung zwischen Trägerfahrzeug und Gestänge bezogen auf die Drehachse erfassenden Sensor umfassen.

Wenigstens ein Sensor zur Erfassung einer Relativdrehung zwischen Trägerfahrzeug und Gestänge kann ein zwischen dem Gestänge und dem Trägerfahrzeug angeordneter Drehwinkelsensor sein.

Alternativ oder zusätzlich kann eine Erfassung einer Relativdrehung zwischen Trägerfahrzeug und Gestänge anhand wenigstens eines einen Winkel zwischen dem Trägerfahrzeug und der Referenzebene erfassenden Neigungssensors und anhand zumindest eines einen Winkel zwischen dem Gestänge und der Referenzebene erfassenden Neigungssensors verwirklicht sein, wobei die Differenz des von den Sensoren erfassten Winkels zwischen dem Trägerfahrzeug und der Referenzebene und des Winkels zwischen dem Gestänge und der Referenzebene einer Relativdrehung zwischen Trägerfahrzeug und Gestänge proportional ist.

Die Erfindung erlaubt eine sehr exakte Bestimmung einer momentanen Drehlage des Gestänges bezogen auf eine Referenzebene. Dies ist im Vergleich zu einer Bestimmung der Drehlage anhand mehrerer Ultraschallsensoren weniger aufwendig und kostenintensiv.

Die Vorrichtung kann zusätzlich einen in Abhängigkeit von Steuerungssignalen der Regelungseinrichtung einen mittleren Abstand des Gestänges gegenüber dem Boden oder dem Bestand beeinflussenden Aktor beispielsweise in Form eines oder mehrerer Hydraulikzylinder umfassen, welcher Steuerungssignale in mechanische Bewegung oder eine andere physikalische Größe, wie beispielsweise Druck umsetzt, und damit eine das Gestänge anhebende oder absenkende Kraft auf das Gestänge ausübt.

Darüber hinaus kann die Vorrichtung mindestens eine Sensoranordnung zur Erfassung wenigstens eines mittleren Abstands des Gestänges gegenüber dem Boden oder dem Bestand umfassen. Vorzugsweise umfasst eine solche Sensoranordnung wenigstens einen an wenigstens einem Ende eines Auslegers des Gestänges angeordneten Abstandssensor. Mittels dieses an wenigstens einem Ende der Ausleger des Gestänges angeordneten Abstandssensors und einer entsprechenden Berücksichtigung dessen Ausgangssignale bei der Erzeugung von Steuerungssignalen vermittels der Regelungseinrichtung kann die Zuverlässigkeit gesteigert werden, mit der verhindert werden kann, dass das Gestänge oder hieran angeordnete Ausbringungsmittel für feste und/oder flüssige Wirkstoffe, wie beispielsweise Spritzdüsen, in Bodenkontakt und/oder in Kontakt mit dem Bestand kommen.

Alternativ oder zusätzlich kann eine solche Sensoranordnung wenigstens einen am das Trägerfahrzeug in dessen Breite nicht überragenden Teil des Gestänges angeordneten Abstandssensor umfassen.

Anhand der Abstandssignale der Sensoren kann die Regelungseinrichtung zumindest für den mindestens einen einen mittleren Abstand des Gestänges gegenüber dem Boden oder dem Bestand beeinflussenden Aktor vorgesehene Steuerungssignale erzeugen.

Um Einflüsse ungleicher Masseverteilungen des Gestänges möglichst auszuschließen verläuft die Drehachse vorzugsweise durch den Schwerpunkt des Gestänges.

Das mindestens eine Gestänge kann dauerhaft oder gegen eine andere Einrichtung zur landwirtschaftlichen Boden- und/oder Bestandsbehandlung auswechselbar an dem Trägerfahrzeug angeordnet sein.

Das Trägerfahrzeug kann hierbei angetrieben oder gezogen sein, so dass die Vorrichtung:
- im Falle eines angetriebenen Trägerfahrzeugs mit dauerhaft angeordnetem Gestänge ein selbstfahrendes landwirtschaftliches Gerät beziehungsweise ein landwirtschaftliches Selbstfahrgerät bildet,
- im Falle eines gezogenen Trägerfahrzeugs mit dauerhaft angeordnetem Gestänge ein gezogenes landwirtschaftliches Gerät, wie beispielsweise einen landwirtschaftlichen Anhänger, bildet, und
- im Falle eines angetriebenen Trägerfahrzeugs mit gegen eine andere Einrichtung zur landwirtschaftlichen Boden- und/oder Bestandsbehandlung beispielsweise an einem Dreipunkt-Kraftheber oder auf einer hierfür vorgesehenen Ladefläche auswechselbar angeordnetem Gestänge entweder ein Anbaugerät, oder ein Aufbaugerät bildet.

Zusätzliche Vorteile zu den bereits genannten Vorteilen gegenüber dem Stand der Technik ergeben sich durch eine vollständige Lösung der gestellten Aufgabe unter Behebung sämtlicher Nachteile des Standes der Technik.

Zudem wird durch die exakte Einhaltung der Abstände der Ausleger gegenüber der Bodenoberfläche und/oder dem Bestand unabhängig von dem sich bewegenden und/oder wankenden Trägerfahrzeug zuverlässig vermieden, dass die Ausleger in Bodenkontakt kommen.

Alle die erwähnten Messdaten, die von den Beschleunigungssensoren und/oder den Gyroskopen o. dgl. Messanordnungen geliefert werden, werden vorzugsweise mit den Druck-, Kraft- und/oder Dehnungsmesswerten des wenigstens einen Stellelements abgeglichen, das zwischen Gestänge und Trägerfahrzeug angeordnet ist, und das im Falle eines ruhenden Gestänges vorzugsweise keinen Differenzdruck bzw. keine oder nur geringe Kraftwerte liefert.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante einer landwirtschaftlichen Verteilvorrichtung, gebildet aus einem landwirtschaftlichen Trägerfahrzeug, das mit einem Spritzgestänge ausgestattet ist.
Fig. 2 zeigt eine Detailansicht einer Aufhängung des Gestänges am Trägerfahrzeug.
Fig. 3 zeigt in zwei schematischen Ansichten verschiedene Ausführungsvarianten der Gestängeverstellung am Trägerfahrzeug.
Fig. 4 zeigt eine schematische Detailansicht einer Anlenkung eines Stellelements am Spritzgestänge.
Fig. 5 zeigt in einem Blockschaltbild einen inneren und äußeren Regelkreis zur Ansteuerung eines Stellelementes für das Spritzgestänge.
Fig. 6 zeigt in zwei schematischen Blockschaltbildern einige wichtige Komponenten zur Verstellung des am Trägerfahrzeug angelenkten Gestänges und deren Verschaltung miteinander.
Fig. 7 zeigt in vier weiteren schematischen Blockschaltbildern einige wichtigste Komponenten zur Verstellung des am Trägerfahrzeug angelenkten Gestänges und deren Verschaltung in inneren und äußeren Regelkreisen.
Fig. 8 zeigt wiederum einen äußeren Regelkreis der Gestängeverstellung in einem schematischen Blockschaltbild.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

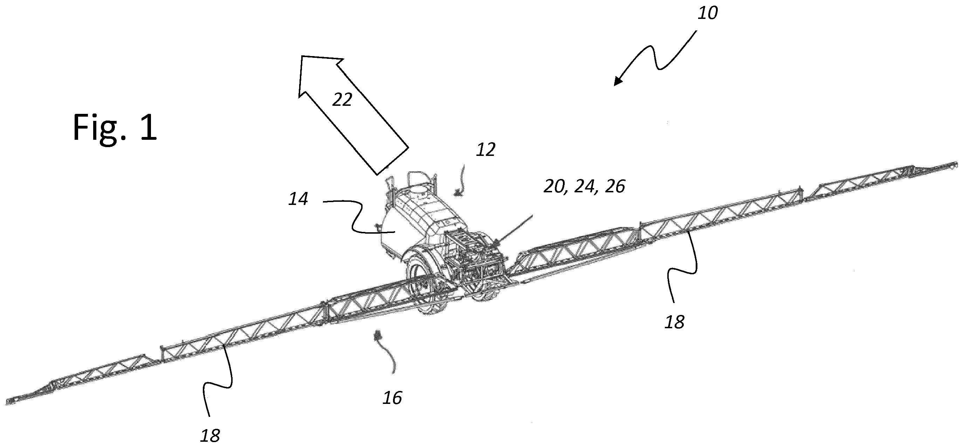

Die schematische Perspektivansicht der Fig. 1 zeigt eine denkbare Ausführungsvariante einer landwirtschaftlichen Verteilvorrichtung 10, gebildet aus einem gezogenen landwirtschaftlichen Trägerfahrzeug 12 mit einem Tank 14 für eine Ausbringflüssigkeit und mit einem heckseitig aufgehängten Spritzgestänge 16, das zwei symmetrisch ausgebildete Auslegerarme 18 aufweist, die mit hier nicht erkennbaren Düsenstöcken und darin integrierten Spritzdüsen für die Zerstäubung der Ausbringflüssigkeit, bspw. des Spritzmittels ausgestattet ist. Die Aufhängung 20 des Spritzgestänges 16 am Rahmen ermöglicht einerseits die Verdrehung des Gestänges 16 um eine horizontale Längsachse, die parallel zur Fahrtrichtung 22 ausgerichtet ist, und erlaubt andererseits dessen horizontale Ausrichtung bzw. parallele Ausrichtung zur Bodenoberfläche, wenn sich die Aufhängung 20 verdreht oder in sonstiger Weise bewegt, insbesondere aufgrund von Bodenunebenheiten, unebenem Gelände etc.

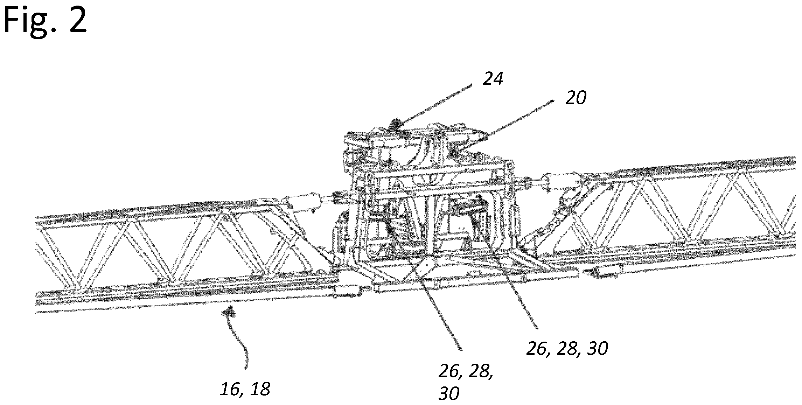

Wie es die Detailansicht der Fig. 2 zeigt, ist das pendelnd bzw. drehbar um die Drehachse (parallel zur Fahrtrichtung 22) an der Aufhängung 20 am Trägerrahmen 24 des Trägerfahrzeugs 12 aufgehängte Gestänge 16 mit pneumatischen oder hydraulischen Stellelementen 26 mit dem Trägerrahmen 24 gekoppelt. Die Stellelemente 26 sind im gezeigten Ausführungsbeispiel durch zwei separate, gegensinnig arbeitende hydraulische oder pneumatische Linearzylinder 28 gebildet, denen jeweils Drucksensoren 30 und/oder Wegsensoren zugeordnet sein können. In den beiden Druckkammern der Stellzylinder 28 werden mittels der Drucksensoren 30 jeweils die Drücke ermittelt (Differenzdrucksensor oder zwei Drucksensoren); ggf. kann auch die Bewegungs- bzw. Längendifferenz des sich verlängernden oder verkürzenden Stellelements 26 mittels der Wegsensoren oder auch mittels Dehnungssmessstreifen auf den Kolbenstangen oder deren Anbindungen am Gestänge 16 und/oder an der Aufhängung 20 ermittelt werden.

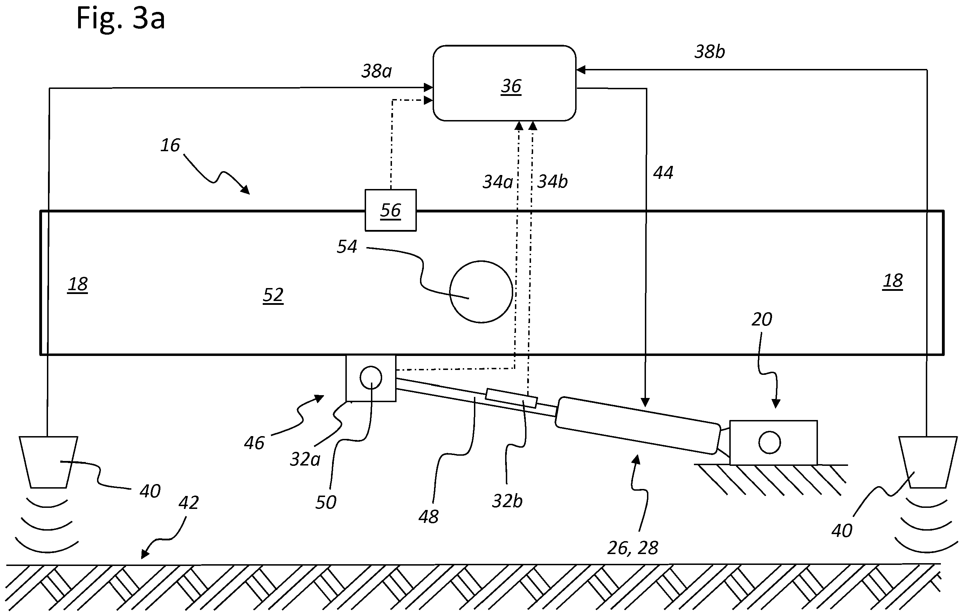

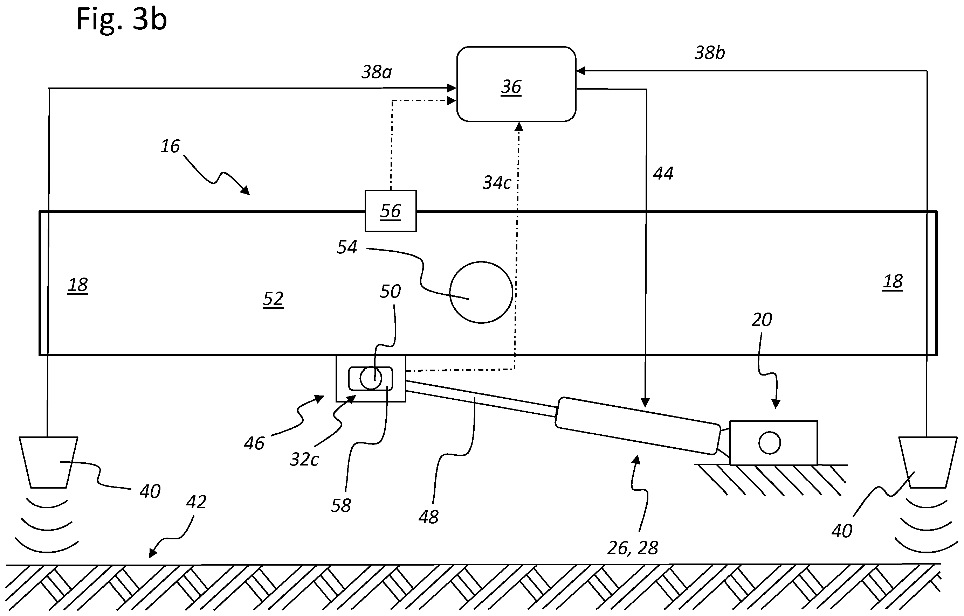

Die schematischen Darstellungen der Figuren 3a und 3b zeigen verschiedene Ausführungsvarianten der Anlenkung des Stellelements 26 bzw. der damit in Verbindung stehenden Sensorik 32 zu dessen Ansteuerung. Die in Fig. 3a lediglich angedeutete Sensoreinrichtung 32 liefert ein Ausgangssignal 34 an eine Steuerungs- und/oder Regelungseinheit 36, die zudem Sensor- bzw. Sollwertsignale 38a und 38b von wenigstens zwei optional zu verstehenden Abstandssensoren 40 verarbeitet, die jeweils an den Auslegerarmen 18 angeordnet sind und jeweils Signalwerte für einen gemessenen Abstand der Auslegerarme 18 zum Boden 42 liefern. Diese Abstandssensoren 40 können bspw. durch Ultraschallsensoren oder durch optische Sensoren o. dgl. gebildet sein. Auf Basis der Sensorsignale 38a und 38b sowie des Ausgangssignals 34 der Sensoreinrichtung 32 generiert die Steuerungs- und/oder Regelungseinheit 36 ein Stellsignal 44 für das Stellelement 26, das auf eine Weise angesteuert werden kann, dass die mechanische Verbindung zwischen der Anlenkung 46 am Spritzestänge 16 und der fahrzeugfesten Aufhängung 20 annähernd stellkraft- und momentenfrei gehalten werden kann. Das Stellsignal 44 bildet hierbei ein Sollsignal innerhalb des äußeren Regelkreises, der anhand der Figuren 6ff. näher erläutert wird.

Bei der in Fig. 3a gezeigten Ausführungsvariante ist das Stellelement 26 durch einen doppelt wirkenden Hydraulikzylinder 28 gebildet, dessen Kolbenstange 48 in einem Bolzen 50 endet, der in der Anlenkung 46 am Mittelteil 52 des Spritzgestänges 16, das die beiden symmetrischen Auslegerarme 18 verbindet, weitgehend spielfrei gelagert ist. Wahlweise kann diese Anlenkung 46 mit einem geeigneten Kraftsensor 32a ausgestattet sein, der die durch den Bolzen 50 übertragenen Kräfte erfasst, daraus ein erstes Ausgangssignal 34a generiert und dadurch die mechanische Verbindung zwischen der Lagerung bzw. Aufhängung 20 und der Anlenkung 46 mittels geeigneter Ansteuerung des Stellelements 26 über das in der Steuerungs- und/oder Regelungseinheit 36 generierte Stellsignal 44 annähernd kräfte- und momentenfrei hält, wenn das Spritzgestänge 16 bzw. dessen Mittelteil 52 um die Drehachse 54 verdreht wird, die ebenso wie die Aufhängung 20 ortsfest am Trägerfahrzeug angeordnet ist.

Alternativ oder zusätzlich kann auch an der Kolbenstange 48 oder an anderer geeigneter Stelle ein Dehnungssensor 32b oder ein geeigneter Kraftsensor o. dgl. angeordnet sein, der durch eine Erfassung der auf die Kolbenstange 48 wirkenden Spannungs- und/oder Dehnungskräfte ein zweites Ausgangssignal 34b generiert und auf diese Weise die mechanische Verbindung zwischen der Lagerung 20 und der Anlenkung 46 mittels geeigneter Ansteuerung des Stellelements 26 über das in der Steuerungs- und/oder Regelungseinheit 36 generierte Stellsignal 44 annähernd kräfte- und momentenfrei halten kann.

Darüber hinaus kann am Gestänge 16, insbesondere an dessen Mittelteil 52 ein Neigungssensor bzw. ein Beschleunigungssensor 56 oder Gyroskop angeordnet sein, dessen Signale ergänzend in der Einheit 36 ausgewertet werden können, um daraus im Zusammenhang mit den weiteren erwähnten Sensorwerten ein sinnvolles Stellsignal 44 gewinnen zu können.

Weitere Varianten zur Erfassung der Stellkräfte und/oder Stellbewegungen zwischen dem Mittelteil 52 des Spritz- oder Ausbringgestänges 16 und der fahrzeugfesten Lagerung 20, d.h. dem Rahmen des in den Figuren 3 nicht dargestellten Fahrzeuges, sind denkbar und sinnvoll realisierbar. So kann die Sensorik bspw. auch durch geeignete Drucksensoren gebildet sein, die im Druckfluidkreislauf des Stellelementes 26 angeordnet sind und bspw. Änderungen des hydraulischen oder pneumatischen Drucks im Bereich des Stellelementes 26, des Hydraulikzylinders 28 und/oder dessen Druckleitungen angeordnet sind und Druckschwankungen erfassen, die sich aus einer Relativbewegung zwischen dem Spritz- oder Ausbringgestänge 16 und dem Fahrzeug bei Schwenkbewegungen um den Aufhängepunkt 54 ergeben. Bei einer solchen optionalen Drucksensorik kann es sinnvoll sein, die Reibungseffekte, die bspw. auf Gleitbewegungen der Kolbenstange 48 entlang von Hydraulikdichtungen zurückzuführen sind, durch Bauteilkenngrößen zu berücksichtigen. Solche Kenngrößen lassen sich den weitgehend normierten Bauteilen zuordnen, die als Stellelemente 26 normalerweise Verwendung finden, so dass die Reibungsanteile und -effekte, die den gemessenen Druckwerten überlagert sind, mit ausreichender Genauigkeit bekannt sind und in den Kräfteberechnungen berücksichtigt und eliminiert werden können.

Bei der in Fig. 3b gezeigten Ausführungsvariante ist das Stellelement 26 durch einen doppelt wirkenden Hydraulikzylinder 28 gebildet, dessen Kolbenstange 48 in einem Bolzen 50 endet, der in der Anlenkung 46 am Mittelteil 52 in einem Langloch 58 gelagert ist. Wahlweise kann diese Anlenkung 46 mit einem geeigneten optischen und/oder mechanischen Wegsensor 32c ausgestattet sein, der die kleinen Auslenkungen des Bolzens 50 im Langloch 58 erfasst, daraus ein drittes Ausgangssignal 34c generiert und dadurch die mechanische Verbindung zwischen der Lagerung 20 und der Anlenkung 46 mittels geeigneter Ansteuerung des Stellelements 26 über das in der Steuerungs- und/oder Regelungseinheit 36 generierte Stellsignal 44 annähernd kräfte- und momentenfrei hält. Der übrige Aufbau der in Fig. 3b gezeigten Variante mit den beiden Abstandssensoren 40 und weiteren Komponenten wie insbesondere dem auf dem Mittelteil 52 montierten Neigungs- oder Beschleunigungssensor 56 bzw. dem Gyroskop kann der in der Fig. 3a dargestellten Ausführung entsprechen. Selbstverständlich können weitere Sensorbauarten als Wegsensoren 32c eingesetzt werden, bspw. induktive Sensoren oder Dreherfassungssensoren o. dgl.

Abhängig von den Signalen 34 und 38 generiert die Steuerungs- und/oder Regelungseinheit 36 ein Stellsignal 44 für eine hier nicht dargestellte Druckversorgungseinheit, mit welcher der Hydraulikzylinder 28 in Verbindung steht. Nur die sehr schnell arbeitende Echtzeitregelung mittels der Stellsignale 44 kann für die gewünschte Kräfte- oder Momentenfreiheit der mechanischen Verbindung durch das Stellelement 26 sorgen. Der Regelungsmechanismus für das Stellelement 26 stellt dieses bzw. den doppelt wirkenden Hydraulikzylinder 28 weitgehend verzögerungslos allen Auslenkungen des Fahrzeugs gegenüber dem Mittelteil 52 um die Schwenklagerung 54 im Aufhängepunkt nach. Das Spritz- oder Ausbringgestänge 16 führt normalerweise keine eigenständigen Reaktionsbewegungen aufgrund von Fahrzeugbewegungen aus, sondern neigt dazu, den Fahrzeugbewegungen nicht zu folgen und bei allen Fahrzeugbewegungen weitgehend statisch und in Ruhe zu bleiben. Um allerdings alle ungewollten Reaktionsbewegungen des Spritz- oder Ausbringgestänges 16 zuverlässig zu unterdrücken, folgt die Kolbenstange 48 des Hydraulikzylinders 28 nahezu verzögerungfrei allen Relativbewegungen des Fahrzeugs gegenüber dem Spritz- oder Ausbringgestänge 16, bei denen eine Schwenkbewegung um die Drehlagerung 54 erfolgt, so dass die Kolbenstange 48 des Hydraulikzylinders 28 über die Anlenkung 46 bewegt wird.

Diese Quasi-"Echtzeit"-Regelung ist dadurch in der Lage, den Zylinder 28 allen Auslenkungen nachzustellen, gleichzeitig aber keine nennenswerten Kräfte vom Fahrzeug in den Mittelteil 52 einzuleiten. Die Regelung beruht darauf, dass die Kräfte und/oder Wege in der Anlenkung 46 erfasst und weitgehend verzögerungsfrei ausgeregelt werden, so dass trotz mechanischer Verbindung über das Stellelement 26 das Spritz- oder Ausbringgestänge 16 annähernd in der zuvor eingestellten Lage verbleibt, unabhängig von den Aufbaubewegungen und Schwankungen des Zug- oder Trägerfahrzeugs, wenn dies über den Boden 42 fährt. Der Regelungsmechanismus sorgt somit für eine aktive "Aus"-Regelung der Wankbewegungen des Fahrzeuges.

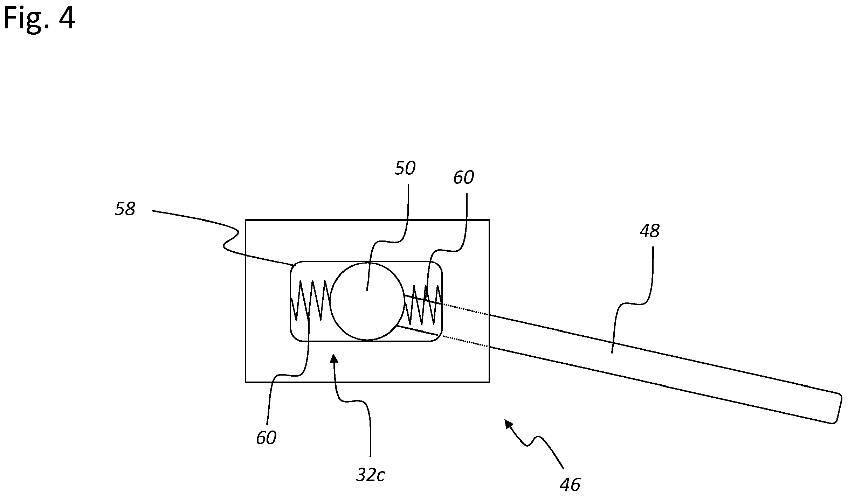

Die schematische Darstellung der Fig. 4 verdeutlicht weiterhin die spielbehaftete Lagerung des mit der Kolbenstange 48 des als Linearantrieb ausgebildeten Stellelements 26 verbundenen Bolzens 50 im Langloch 58 der Anlenkung 46, die mit dem Mittelteil 52 verbunden ist. Auf beiden Seiten des Bolzens 50 befinden sich Kraftübertragungselemente wie bspw. die dargestellten Druckfedern 60, die für die Abstützung des Bolzens 50 im Langloch 58 sorgen. Über einen geeigneten Sensor (z.B. Sensor 32c; vgl. Fig. 3b) wird zudem die Position des Bolzens 50 im Langloch 58 erfasst.

Das Langloch 58 ist ein mit dem Spritzgestänge 16 fest verbundenes Element. Das Gegenstück bzw. die Kolbenstange 48 des Stellgliedes 26 (z.B. hydraulischer Zylinder, Pneumatikzylinder, sonstiger Linearantrieb etc.) ist mit dem Langloch 58 und dem Stellglied 26 des Trägerfahrzeuges am Widerlagerteil 20 (vgl. Fig. 3) fest verbunden. Gekoppelt sind beide Teile durch die beiden Federn 60 oder sonstigen elastischen Elemente, die sich zwischen Verbindungselement oder Bolzen 50 und dem Langloch 58 befinden. Diese Federn 60 können mechanisch sein, müssen es aber nicht; so wären auch Elastomere oder dergl. vorstellbar. Auch wäre es vorstellbar, dass zur Koppelung zwischen Stellglied 26 und Spritzgestänge 16 noch ein zusätzlicher Hebel angebracht ist, dem ebenfalls Federelemente zugeordnet sind. Die Federelemente 60 sind im gezeigten Ausführungsbeispiel jeweils so angebracht, dass sich beide Kräfte, d.h. die in Längsrichtung des Langloches 58 wirkenden Kräfte, aufheben, wenn sich das Verbindungselement oder der Bolzen 50 in der Mittellage des Langloches 58 befindet; hierbei befindet sich der Hebel in Mittelposition. Befindet sich das Verbindungselement 50 außerhalb der Mittelposition des Langloches 58 bzw. befindet sich der Hebel außerhalb der Mitte, wird entsprechend der Federkennlinie eine Kraft je nach Auslenkposition übertragen. Somit kann über die Federkennlinie, die Auslenkposition in eine eingeleitete Kraft bzw. über einen definierten Hebelarm in ein Drehmoment umgerechnet werden.

Umgekehrt bedeutet das: Um ein gewisses Drehmoment einzuleiten, kann über den Hebelarm und die Federkennlinie eine Sollauslenkung der Feder 60 oder des Hebels errechnet werden. Diese Sollauslenkung stellt ein sehr schnell arbeitender Regelkreis ein, der als Referenzwert die Position des Verbindungselementes 50 in Bezug auf das Langloch 58 oder die Hebelposition misst und entsprechend der Differenz aus Sollauslenkung und gemessener Auslenkung den Zylinder 28 steuert. Diese Regelung stellt den inneren Regelkreis gemäß vorliegender Definition dar.

Der innere Regelkreis gleicht auch Wankbewegungen des Trägerfahrzeuges aus, indem er immer arbeitet und ständig die Auslenkung der Federn 60 und des Hebels auf dem gewünschten Wert hält. Dieser Sollwert wird von einem äußeren Regelkreis vorgegeben. Dass Stellglied des äußeren Regelkreises ist somit das Solldrehmoment. Er regelt dieses Solldrehmoment abhängig von Lage und Bewegung des Gestänges 16, der erfassten Abstände zwischen Gestänge 16 und Boden 42 sowie abhängig von Vorgaben vom Bediener.

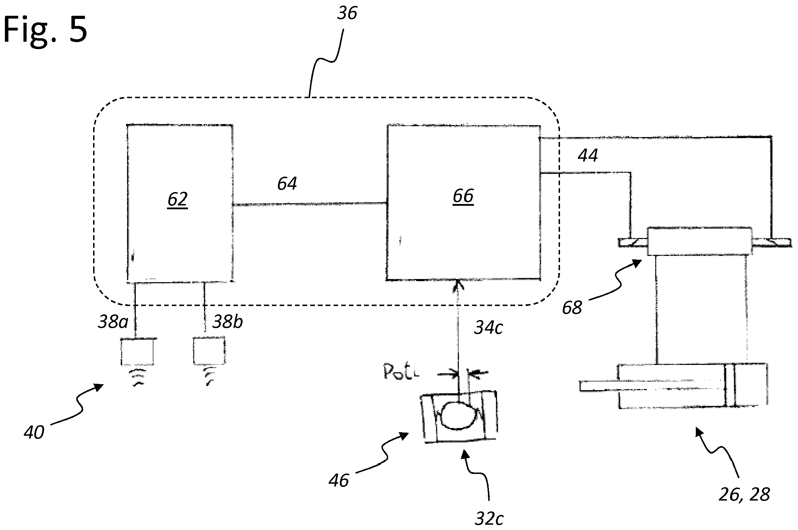

Dieser Zusammenhang ist in der Fig. 5 nochmals schematisch verdeutlicht. So liefern bspw. die beiden Abstandssensoren 40, die an den Auslegerarmen 18 des Spritzgestänges 16 angeordnet sind, die Messwerte 38a und 38b an die Steuerungs- und/oder Regelungseinheit 36, die aus diesen Messwerten in ihrem äußeren Regelkreis 62 ein Sollsignal 64 bildet, das an den inneren Regelkreis 66 geliefert wird. Dieser innere Regelkreis 66 verarbeitet zudem das Sensorsignal 34c des Sensors 32c, der die Auslenkung des Bolzens 50 im Langloch 58 im Bereich der Anlenkung 46 (vgl. Fig. 4) erfasst. Auf Basis dieses Sollsignals 64 und des Sensorsignals 34c bildet der innere Regelkreis 66 der Schaltung 36 passende Steuersignale oder Stellsignale 44 für eine hydraulische Druckversorgung 68, die das Stellelement 26 bzw. den doppelt wirkenden Hydraulikzylinder 28 mit Stelldruck versorgt.

Solange keine Regelung stattfindet, ist der innere Regelkreis 66 aktiv und sorgt dafür, dass keine Stellkräfte vom Stellelement 26 erzeugt werden. Soll das Gestänge 16 verstellt werden, greifen der innere Regelkreis 66 wie der äußere Regelkreis 62, wobei der äußere Regelkreis 62 vom inneren Regelkreis 66 jeweils übersteuert wird, wobei diese Übersteuerung ggf. auch umgekehrt erfolgen könnte, d.h. dass der innere Regelkreis 66 vom äußeren Regelkreis 62 übersteuert wird.

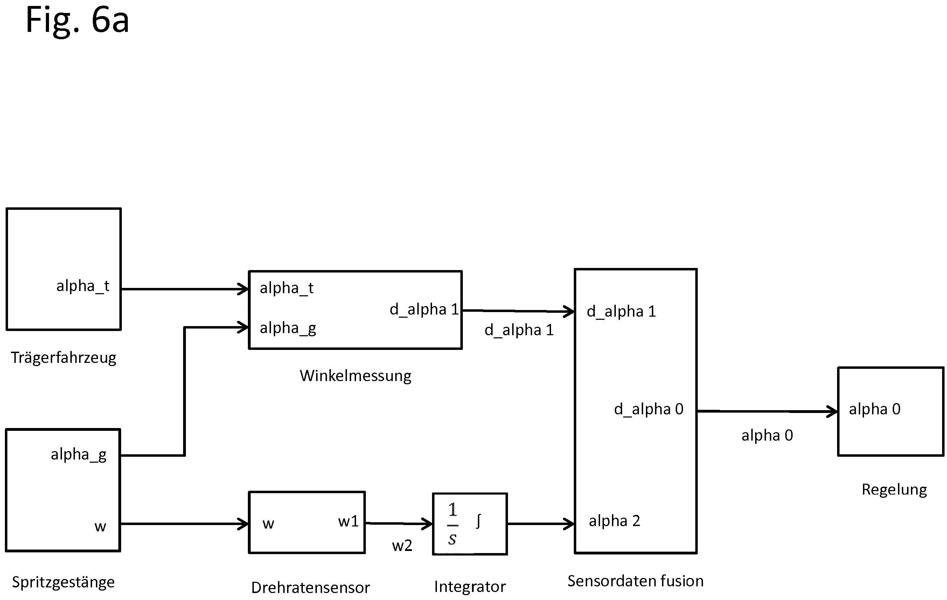

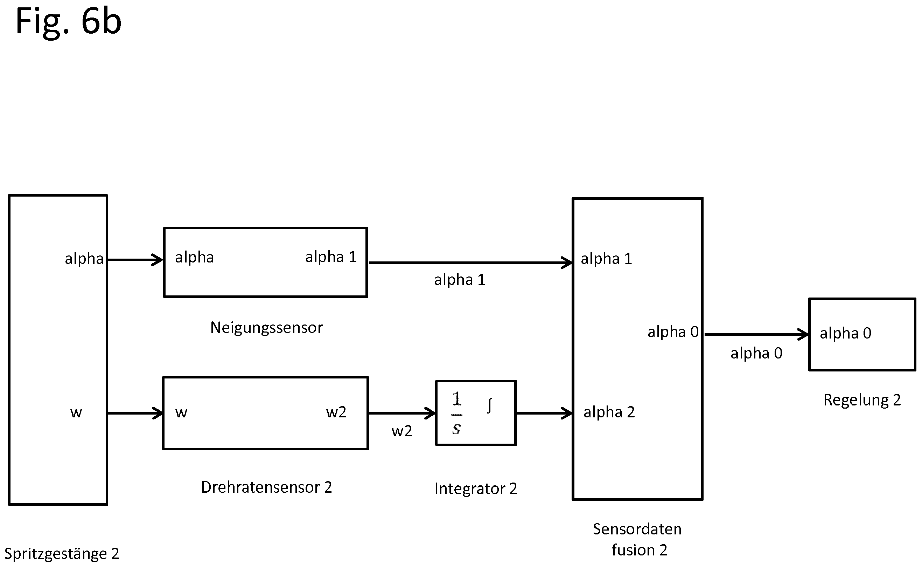

Die schematischen Blockschaltbilder der Fig. 6 zeigen einige wichtige Komponenten zur Verstellung des am Trägerfahrzeug angelenkten Gestänges und deren Verschaltung miteinander. So verdeutlicht die Fig. 6a ein Ausführungsbeispiel zur Gewinnung von Sensordaten, die für die Regelung der Spritzgestängepositionierung verwendet werden können. Die Referenzebene ist hierbei die langfristige Winkelausrichtung des Trägerfahrzeuges. Bei dieser Schaltung wird am Trägerfahrzeug dessen Neigungswinkel alpha_t zur Horizontalen erfasst und in ein Modul Winkelmessung geliefert. Zudem wird ein Neigungswinkel alpha_g des Spritzgestänges zur Horizontalen gemessen und dieser Wert ebenfalls zum Modul Winkelmessung geliefert, wo daraus ein Differenzwinkel d_alpha 1 zwischen Trägerfahrzeug und Spritzgestänge errechnet wird. Außerdem wird mittels eines Drehratensensors die Drehgeschwindigkeit w am Spritzgestänge erfasst, und zwar unabhängig ist von allen überlagerten Drehbewegungen des Trägerfahrzeugs. Durch Integration wird daraus ein Winkel alpha 2 aus den Werten des Drehratensensors errechnet. In der Sensordatenfusion wird daraus ein gefilterter Winkel alpha 0 errechnet, der für die Regelung verwendet wird.

Zudem verdeutlicht die Fig. 6b ein weiteres Ausführungsbeispiel zur Gewinnung von Sensordaten, die für die Regelung der Spritzgestängepositionierung verwendet werden können. Die Referenzebene ist hierbei ein künstlicher Horizont. Bei dieser Schaltung wird nur am Spritzgestänge mittels eines Neigungssensors dessen Neigungswinkel alpha a sowie mittels eines Drehratensensors dessen Drehgeschwindigkeit w, unabhängig von den Drehbewegungen des Trägerfahrzeuges erfasst. Aus der Drehrate wird durch Integration der Winkel alpha 2 errechnet. In der Sensordatenfusion wird daraus wiederum ein gefilterter Winkel alpha 0 errechnet, der für die Regelung verwendet wird.

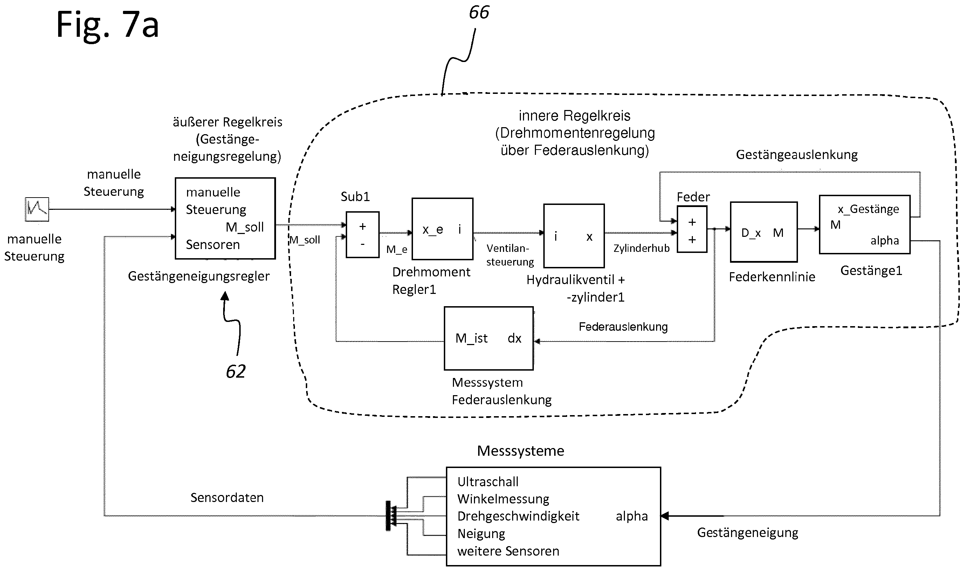

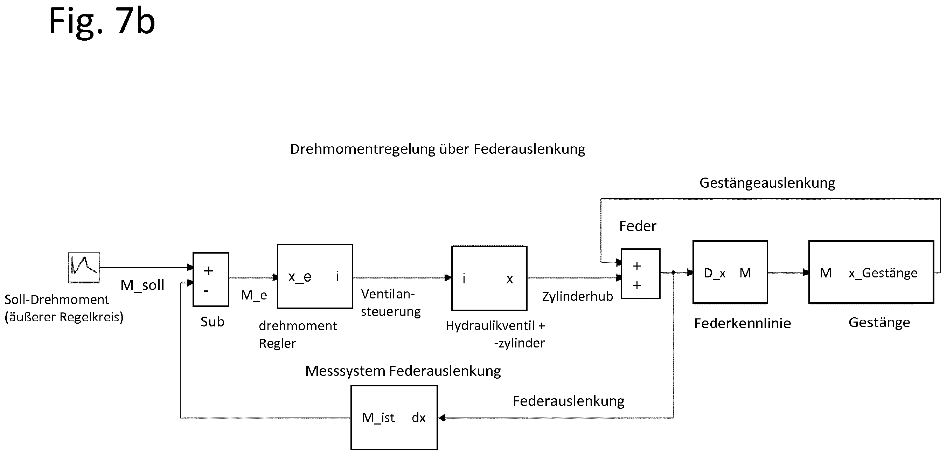

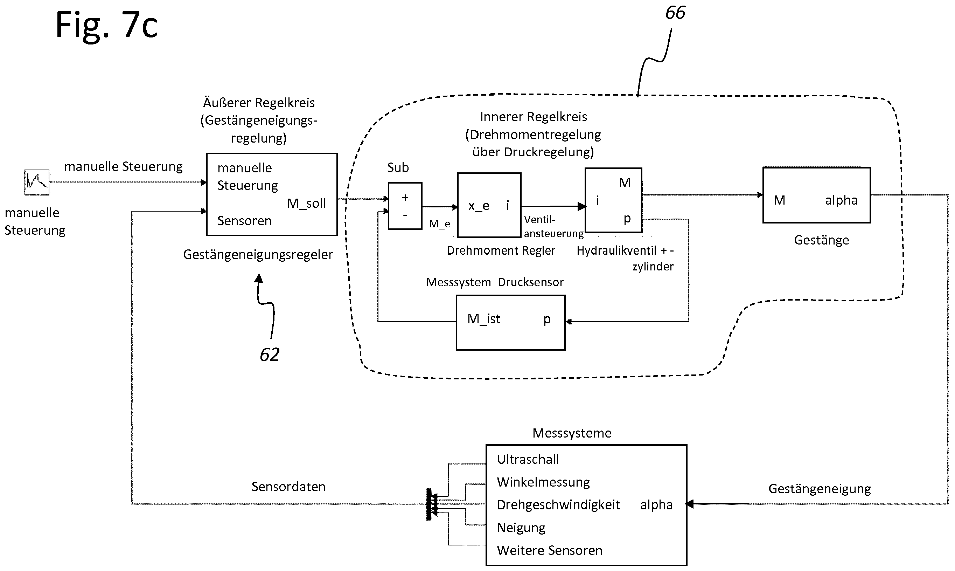

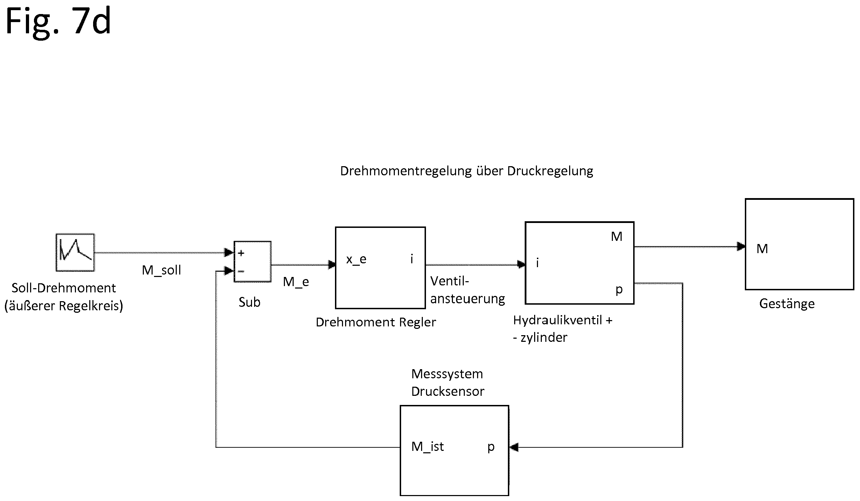

Die insgesamt vier schematischen Blockschaltbilder der Fig. 7 zeigen einen in einer Kaskade verschalteten zweistufigen Regelkreis zur Verstellung des am Trägerfahrzeug angelenkten Gestänges und deren Verschaltung miteinander. Der mit unterbrochener Linie eingekreiste innere Regelkreis 66 (Fig. 7a und Fig. 7c) regelt das Drehmoment, das zur Verstellung des Spritzgestänges in dieses eingeleitet wird. Die Regelung erfolgt unabhängig von der aktuellen Lage und Drehbewegung des Gestänges. Dies kann folgendermaßen realisiert sein: es kann die Federauslenkung gemäß Fig. 7b geregelt werden. Die Federkraft ist hierbei proportional zur Auslenkung und damit - über einen gegebenen Hebelarm - auch proportional zum Drehmoment. Damit ist auch das eingeleitete Drehmoment proportional zur geregelten Federauslenkung.

Wahlweise kann auch eine Druckregelung des verwendeten Übertragungsmediums gemäß Fig. 7c und Fig. 7d erfolgen. Die Verstellkraft ist hierbei proportional zum Druck des Übertragungsmediums und damit - über den gegebenen Hebelarm - auch proportional zum Drehmoment. Damit ist auch das eingeleitete Drehmoment proportional zur geregelten Druck.

Würde nun durch eine Störung von außen (z.B. ausgelöst durch eine Drehbewegung des Trägerfahrzeuges) sich die jeweilige Regelgröße (Druck oder Federauslenkung)äandern, gleicht dieser Regelkreis diesen Regelfehler sehr schnell aus und stellt sicher, dass immer das Soll-Drehmoment in das Gestänge eingeleitet wird. Soll kein Drehmoment eingeleitet werden, erhält der innere Regelkreis den Wert Null als Sollwert. Der innere Regelkreis regelt dann die jeweilige Stellgröße so aus, dass kein Drehmoment eingeleitet wird, auch wenn sich die äußeren Einflüsse ändern, bspw. durch eine Bewegung des Trägerfahrzeuges.

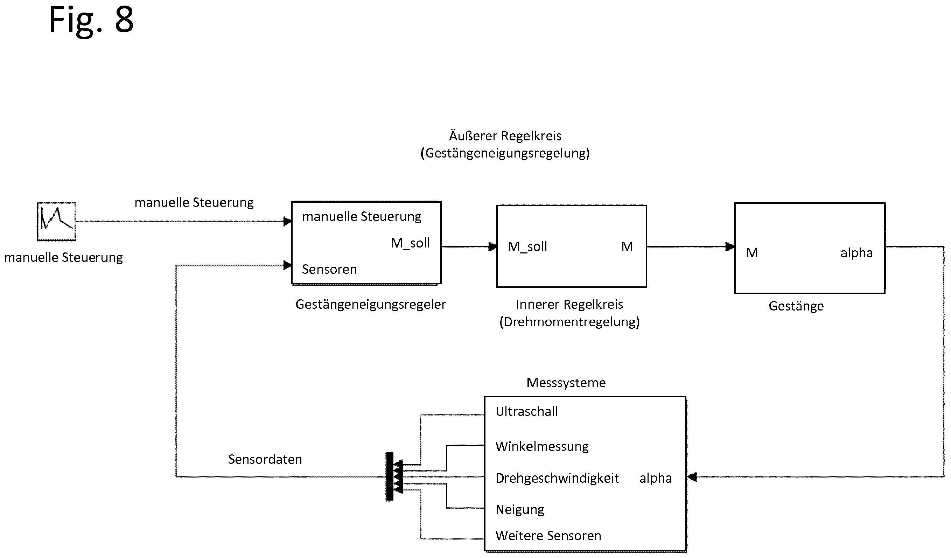

Der äußere Regelkreis 62 (vgl. Fig. 7a und Fig. 7c) umschließt den inneren Regelkreis 66 und regelt den Sollwert des inneren Regelkreises 66. Die Stellgröße des äußeren Regelkreises 62 ist somit ein Soll-Drehmoment, welches der innere Regelkreis 66 regelt. Die Darstellung der Fig. 8 zeigt diesen äußeren Regelkreis 62 der Gestängeverstellung in einem schematischen Blockschaltbild. Die Aufgabe dieses Regelkreises ist die Regelung des Gestänges über die Stellgröße Drehmoment, abhängig von der Lage und Bewegungen des Gestänges sowie der manuellen Bedienung. Die Lage und Bewegung des Gestänges kann auf unterschiedliche Weise über diverse Sensoren erfasst werden, so über Winkelsensoren, Drehratensensoren, künstlichen Horizont und/oder über manuelle Steuerungen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Verteilvorrichtung
- 12: Trägerfahrzeug
- 14: Tank
- 16: Gestänge, Spritzgestänge
- 18: Auslegerarme
- 20: Aufhängung
- 22: Fahrtrichtung
- 24: Trägerrahmen
- 26: Stellelement
- 28: Linearzylinder, Hydraulikzylinder, Pneumatikzylinder
- 30: Differenzdrucksensor, Drucksensor
- 32: Sensoranordnung, Sensorik
- 34: Ausgangssignale
- 36: Steuereinheit, Regeleinheit
- 38: Sensorsignale, Sollwertsignale
- 40: Abstandssensor
- 42: Boden
- 44: Stellsignal
- 46: Anlenkung
- 48: Kolbenstange
- 50: Bolzen
- 52: Mittelteil
- 54: Drehachse, Aufhängepunkt
- 56: Beschleunigungssensor, Gyroskop
- 58: Langloch
- 60: Druckfeder
- 62: Äußerer Regelkreis
- 64: Sollsignal
- 66: Innerer Regelkreis
- 68: Hydraulische Druckversorgung

## Patentansprüche

1. Vorrichtung (10) zum Ausbringen von flüssigen Wirkstoffen, umfassend:
- ein Trägerfahrzeug (12),
- mindestens ein zumindest um eine Drehachse schwenkbar angeordnetes Spritzgestänge (16),
- mindestens eine Sensoranordnung zur Erfassung einer Drehgeschwindigkeit und/oder einer Drehlage des Spritzgestänges (16) um die Drehachse in Bezug auf eine Referenzebene und/oder in Bezug auf eine Bodenoberfläche,
- eine Ausgangssignale der mindestens einen Sensoranordnung zu Steuerungssignalen verarbeitende Regelungseinrichtung (36), die dazu eingerichtet ist, das Spritzgestänge mittels wenigstens zwei gekoppelter Regelkreise, umfassend einen inneren Regelkreis (66) und einen äußeren Regelkreis (62), in seiner Drehlage und/oder Drehgeschwindigkeit zu beeinflussen bzw. zu steuern,
- wenigstens einen in Abhängigkeit von Steuerungssignalen der Regelungseinrichtung die momentane Drehlage des Spritzgestänges (16) um die Drehachse beeinflussenden Aktor (26; 28),
wobei
- in dem äußeren Regelkreis (62) aus den Ausgangssignalen der mindestens einen
Sensoranordnung durch die Regelungseinrichtung ein Sollwert und/oder Solldrehmoment für den wenigstens einen Aktor (26; 28) generiert wird,
- und wobei in dem inneren Regelkreis (62) ein das Spritzgestänge (16) bewegendes und/oder beeinflussendes tatsächliches Drehmoment und/oder Istwert, der auf Aktorauslenkungen und/oder Steuersignalen des wenigstens einen Aktors (26; 28) basiert, erfasst und zur Generierung eines Korrekturwertes für die Erreichung des Solldrehmomentes und/oder Sollwertes verwendet wird, **dadurch gekennzeichnet, dass** der innere Regelkreis anhand der Sollwertvorgabe des äußeren Regelkreises das Ist-Drehmoment bzw. die Ist-Stellkraft, welche durch den wenigstens einen Aktor tatsächlich in das Spritzgestänge eingeleitet werden, regelt.

2. Vorrichtung nach Anspruch 1, bei der der äußere Regelkreis (62) aus Sensordaten der wenigstens einen Sensoranordnung einen Sollwert für die Ansteuerung des inneren Regelkreises und/oder des wenigstens einen Aktors generiert, der eine Sollposition des Spritzgestänges (16) vorgibt.

3. Vorrichtung (10) nach Anspruch 1 oder 2, bei der der innere Regelkreis (66) weitere Sensordaten berücksichtigt, die im unmittelbaren Zusammenhang mit Steuersignalen des wenigstens einen Aktors (26; 28) und/oder dessen erfasster Wechselwirkung mit dem beweglich aufgehängten Spritzgestänge (16) gewonnen werden.

4. Vorrichtung (10) nach Anspruch 3, bei der die weiteren Sensordaten ein vom Aktor in das Spritzgestänge (16) eingeleitete Verstelldrehmoment sind, das gemessen oder aus der Wechselwirkung des Aktors (26; 28) mit dem Spritzgestänge (16) abgeleitet wird.

5. Vorrichtung (10) nach einem der Ansprüche 1 bis 4, bei der die mindestens eine Sensoranordnung zur Erfassung der Drehgeschwindigkeit (w) und/oder Drehlage des Spritzgestänges um die Drehachse in Bezug auf die Referenzebene mindestens einen am Spritzgestänge (16) angeordneten Drehraten-, Drehwinkelgeschwindigkeits- und/oder Drehbeschleunigungssensor (56) umfasst.

6. Vorrichtung (10) nach einem der Ansprüche 1 bis 5, bei der die mindestens eine Sensoranordnung zur Erfassung der Drehgeschwindigkeit und/oder Drehlage des Spritzgestänges um die Drehachse in Bezug auf die Referenzebene mindestens einen am Trägerfahrzeug angeordneten Drehraten-, Drehwinkelgeschwindigkeits- und/oder Drehbeschleunigungssensor umfasst.

7. Vorrichtung (10) nach einem der Ansprüche 1 bis 6, bei der der wenigstens eine Aktor durch wenigstens einen doppelt wirkenden, mit fluidischem Druck arbeitenden Linearantrieb gebildet ist, der eine Stellverbindung zwischen dem Trägerfahrzeug und dem schwenkbaren Spritzgestänge (16) herstellt, wobei ein mit einem Spritzgestänge (16) gekoppelter, in einem Zylinderraum zwischen zwei Endlagen beweglicher Kolben des Linearantriebs zwei Druckräume voneinander trennt, welche für jede der beiden Verstellrichtungen des Spritzgestänges (16) jeweils mit fluidischem Stelldruck beaufschlagbar sind.

8. Vorrichtung (10) nach einem der Ansprüche 1 bis 6, bei welcher der Aktor durch wenigstens zwei gegensinnig und jeweils mit fluidischem Druck arbeitende Linearantriebe gebildet ist, die eine Stellverbindung zwischen dem Trägerfahrzeug und dem schwenkbaren Spritzgestänge (16) herstellen, wobei jeder der beiden Linearantriebe jeweils einen Druckraum aufweist, und wobei jeweils einer der beiden Linearantriebe für eine vorgegebene Verstellrichtung des Spritzgestänges mit fluidischem Stelldruck beaufschlagbar ist.

9. Verfahren zur Steuerung einer Vorrichtung (10) nach einem der Ansprüche 1 bis 8 anhand einer Regelung der Drehlage des um eine Drehachse beweglich an einem Trägerfahrzeug angeordneten Spritzgestänges in Abhängigkeit von einer momentanen Drehlage und/oder eines gemessenen Differenzdrucks in wenigstens zwei Druckräumen wenigstens eines mit fluidischem Druck arbeitenden Aktors,
- wobei zumindest eine Drehgeschwindigkeit und/oder eine Drehlage des Spritzgestänges um die Drehachse in Bezug auf eine Referenzebene und/oder in Bezug auf eine Bodenoberfläche erfasst wird,
- woraus in einer Regelungseinrichtung (36), die das Spritzgestänge (16) mittels wenigstens zwei gekoppelter Regelkreise, umfassend einen inneren Regelkreis (66) und einen äußeren Regelkreis (62), in seiner Drehlage und/oder Drehgeschwindigkeit beeinflusst bzw. steuert, Steuersignale für wenigstens einen Aktor zur Beeinflussung der momentanen Drehlage des Spritzgestänges (16)um die Drehachse generiert werden,
- wobei
- in dem äußeren Regelkreis (62) aus den Ausgangssignalen der mindestens einen Sensoranordnung durch die Regelungseinrichtung ein Sollwert und/oder Solldrehmoment für den wenigstens einen Aktor (26; 28) generiert wird,
- und wobei in dem inneren Regelkreis (62) ein das Spritzgestänge (16) bewegendes und/oder beeinflussendes tatsächliches Drehmoment, das auf Aktorauslenkungen und/oder Steuersignalen des wenigstens einen Aktors (26; 28) basiert, erfasst und zur Erzeugung eines Korrekturwertes für die Sollauslenkung verarbeitet wird, **dadurch gekennzeichnet, dass** der innere Regelkreis anhand der Sollwertvorgabe des äußeren Regelkreises das Ist-Drehmoment bzw. die Ist-Stellkraft, welche durch den wenigstens einen Aktor tatsächlich in das Spritzgestänge eingeleitet werden, regelt.

10. Verfahren nach Anspruch 9, bei dem sowohl die Messdaten der wenigstens einen Sensoranordnung als auch die Differenzdrücke zwischen den beiden Druckräumen des wenigstens einen Aktors zur Ermittlung einer aktuellen Drehlage und/oder einer Soll-Drehlage zwischen Spritzgestänge (16) und Trägerfahrzeug (12) herangezogen und von einer Regelungseinrichtung verarbeitet werden, die den wenigstens einen Aktor ansteuert.

11. Verfahren nach Anspruch 9 oder 10, bei der der äußere Regelkreis aus Sensordaten der wenigstens einen Sensoranordnung einen Sollwert für die Ansteuerung des wenigstens einen Aktors generiert, der eine Sollposition des Spritzgestänges vorgibt.

12. Verfahren nach einem der Ansprüche 9 bis 11, bei der der innere Regelkreis weitere Sensordaten berücksichtigt, die im unmittelbaren Zusammenhang mit Steuersignalen des wenigstens einen Aktors und/oder dessen erfasster Wechselwirkung mit dem beweglich aufgehängten Spritzgestänge gewonnen werden.

13. Verfahren nach Anspruch 12, bei der die weiteren Sensordaten ein vom Aktor in das Spritzgestänge (16) eingeleitete Verstelldrehmoment sind, das gemessen oder aus der Wechselwirkung des Aktors (26; 28) mit dem Spritzgestänge (16) abgeleitet wird.

## Claims

1. An apparatus (10) for applying liquid active substances, comprising:
- a carrier vehicle (12),
- at least one spray boom (18), which is arranged so as to be pivotable at least about one pivot axis,
- at least one sensor arrangement for detecting a pivoting speed and/or a pivoting position of the spray boom (16) about the pivot axis with respect to a reference plane and/or with respect to a ground surface,
- a control device (36), which processes output signals of the at least one sensor arrangement to form control signals and is designed to influence or control the spray boom in its pivoting position and/or pivoting speed by means of at least two coupled control loops, comprising an inner control loop (66) and an outer control loop (62),
- at least one actuator (26; 28), which influences the momentary pivoting position of the spray boom (16) about the pivot axis on the basis of control signals of the control device, wherein
- a setpoint value and/or setpoint torque for the at least one actuator (26; 28) is generated by the control device from the output signals of the at least one sensor arrangement in the outer control loop (62),
and wherein an actual torque and/or actual value, which moves and/or influences the spray boom (16) and is based on actuator deflections and/or control signals of the at least one actuator (26; 28), is detected in the inner control loop (62) and is used for generating a correction value for achieving the setpoint torque and/or setpoint value, **characterized in that**, on the basis of the setpoint presetting of the outer control loop, the inner control loop controls the actual torque or the actual actuating force that is actually introduced into the spray boom by the at least one actuator.

2. The apparatus according to Claim 1, in which the outer control loop (62) generates from sensor data of the at least one sensor arrangement a setpoint value for the activation of the inner control loop and/or the at least one actuator, which presets a setpoint position of the spray boom (16).

3. The apparatus (10) according to Claim 1 or 2, in which the inner control loop (66) takes into account further sensor data, which are obtained in direct connection with control signals of the at least one actuator (26; 28) and/or its detected interaction with the movably suspended spray boom (16).

4. The apparatus (10) according to Claim 3, in which the further sensor data are an adjustment torque, which is introduced into the spray boom (16) by the actuator and is measured or derived from the interaction of the actuator (26; 28) with the spray boom (16).

5. The apparatus (10) according to one of Claims 1 to 4, in which the at least one sensor arrangement for detecting the pivoting speed (w) and/or pivoting position of the spray boom about the pivot axis with respect to the reference plane comprises at least one pivoting-rate, angular-pivoting-speed and/or pivoting-acceleration sensor (56) arranged on the spray boom (16).

6. The apparatus (10) according to one of Claims 1 to 5, in which the at least one sensor arrangement for detecting the pivoting speed and/or pivoting position of the spray boom about the pivot axis with respect to the reference plane comprises at least one pivoting-rate, angular-pivoting-speed and/or pivoting-acceleration sensor arranged on the carrier vehicle.

7. The apparatus (10) according to one of Claims 1 to 6, in which the at least one actuator is formed by at least one double-acting linear drive, which operates with fluidic pressure and produces an actuating connection between the carrier vehicle and the pivotable spray boom (16), wherein a piston of the linear actuator, which is coupled with a spray boom (16) and is movable between two end positions in a cylinder chamber, separates from each other two pressure chambers to which fluidic actuating pressure can be respectively applied for each of the two adjusting directions of the spray boom (16).

8. The apparatus (10) according to one of Claims 1 to 6, in which the actuator is formed by at least two linear drives, which operate in opposite directions and in each case with fluidic pressure and produce an actuating connection between the carrier vehicle and the pivotable spray boom (16), wherein each of the two linear drives has in each case a pressure chamber, and wherein fluidic actuating pressure can be applied to one of the two linear drives in each case for a preset adjusting direction of the spray boom.

9. A method for controlling an apparatus (10) according to one of Claims 1 to 8 on the basis of a control of the pivoting position of the spray boom arranged movably about a pivot axis on a carrier vehicle on the basis of a momentary pivoting position and/or a measured differential pressure in at least two pressure chambers of at least one actuator operating with fluidic pressure,
- wherein at least a pivoting speed and/or a pivoting position of the spray boom about the pivot axis with respect to a reference plane and/or with respect to a ground surface is detected,
- from which control signals for at least one actuator for influencing the momentary pivoting position of the spray boom (16) about the pivot axis are generated in a control device (36), which influences or controls the spray boom (16) in its pivoting position and/or in its pivoting speed by means of at least two coupled control loops, comprising an inner control loop (66) and an outer control loop (62),
- wherein a setpoint value and/or setpoint torque for the at least one actuator (26; 28) is generated by the control device from the output signals of the at least one sensor arrangement in the outer control loop (62),
- and wherein an actual torque, which moves and/or influences the spray boom (16) and is based on actuator deflections and/or control signals of the at least one actuator (26; 28), is detected in the inner control loop (62) and is processed for generating a correction value for the setpoint deflection, **characterized in that**, on the basis of the setpoint presetting of the outer control loop, the inner control loop controls the actual torque or the actual actuating force that is actually introduced into the spray boom by the at least one actuator.

10. The method according to Claim 9, in which both the measurement data of the at least one sensor arrangement and the differential pressures between the two pressure chambers of the at least one actuator are used for determining a present pivoting position and/or a setpoint pivoting position between the spray boom (16) and the carrier vehicle (12) and are processed by a control device, which activates the at least one actuator.

11. The method according to Claim 9 or 10, in which the outer control loop generates from sensor data of the at least one sensor arrangement a setpoint value for the activation of the at least one actuator, which presets a setpoint position of the spray boom.

12. The method according to one of Claims 9 to 11, in which the inner control loop takes into account further sensor data, which are obtained in direct connection with control signals of the at least one actuator and/or its detected interaction with the movably suspended spray boom.

13. The method according to Claim 12, in which the further sensor data are an adjustment torque, which is introduced into the spray boom (16) by the actuator and is measured or derived from the interaction of the actuator (26; 28) with the spray boom (16).

## Revendications

1. Arrangement (10) pour épandre des substances actives liquides, comprenant :
- un véhicule porteur (12),
- au moins une rampe de pulvérisation (16) montée pivotante autour d'un axe de rotation,
- au moins un système capteur destiné à détecter une vitesse de rotation et/ou une position de rotation de la rampe de pulvérisation (16) autour de l'axe de rotation par rapport à un plan de référence et/ou par rapport à une surface du sol,
- un dispositif de régulation (36) qui traite les signaux de sortie de l'au moins un système capteur en des signaux de commande, lequel est conçu pour influencer ou pour commander la position de rotation et/ou la vitesse de rotation de la rampe de pulvérisation au moyen d'au moins deux circuits de régulation couplés, comprenant un circuit de régulation intérieur (66) et un circuit de régulation extérieur (62),
- au moins un actionneur (26 ; 28) qui influence la position de rotation momentanée de la rampe de pulvérisation (16) autour de l'axe de rotation en fonction des signaux de commande du dispositif de régulation,
- une valeur de consigne et/ou un couple de consigne pour l'au moins un actionneur (26 ; 28) étant généré par le dispositif de régulation dans le circuit de régulation extérieur (62) à partir des signaux de sortie de l'au moins un système capteur,
- un couple effectif et/ou une valeur réelle, qui se base sur les excursions de l'actionneur et/ou les signaux de commande de l'au moins un actionneur (26 ; 28) et qui déplace et/ou influence la rampe de pulvérisation (16), étant acquis dans le circuit de régulation intérieur (62) et utilisé pour générer une valeur de correction pour atteindre le couple de consigne et/ou la valeur de consigne, **caractérisé en ce que** le circuit de régulation intérieur régule le couple réel ou la force de réglage réelle, lesquels sont effectivement introduits dans la rampe de pulvérisation par l'au moins un actionneur, à l'aide de la valeur de consigne prescrite du circuit de régulation extérieur.

2. Arrangement selon la revendication 1, avec lequel le circuit de régulation extérieur (62) génère une valeur de consigne pour la commande du circuit de régulation intérieur et/ou de l'au moins un actionneur à partir des données de capteur de l'au moins un système capteur, laquelle prescrit une position de consigne de la rampe de pulvérisation (16).

3. Arrangement (10) selon la revendication 1 ou 2, avec lequel le circuit de régulation intérieur (66) tient compte de données de capteur supplémentaires qui sont obtenues en relation directe avec les signaux de commande de l'au moins un actionneur (26 ; 28) et/ou de leur interaction détectée avec la rampe de pulvérisation (16) suspendue avec mobilité.

4. Arrangement (10) selon la revendication 3, avec lequel les données de capteur supplémentaires sont un couple de positionnement introduit par l'actionneur dans la rampe de pulvérisation (16), lequel est mesuré ou dérivé à partir de l'interaction de l'actionneur (26 ; 28) avec la rampe de pulvérisation (16).

5. Arrangement (10) selon l'une des revendications 1 à 4, avec lequel l'au moins un système capteur comporte, pour la détection de la vitesse de rotation (w) et/ou de la position de rotation de la rampe de pulvérisation autour de l'axe de rotation par rapport au plan de référence, au moins un capteur de vitesse de rotation, de vitesse angulaire de rotation et/ou d'accélération de rotation (56) disposé sur la rampe de pulvérisation (16) .

6. Arrangement (10) selon l'une des revendications 1 à 5, avec lequel l'au moins un système capteur comporte, pour la détection de la vitesse de rotation et/ou de la position de rotation de la rampe de pulvérisation autour de l'axe de rotation par rapport au plan de référence, au moins un capteur de vitesse de rotation, de vitesse angulaire de rotation et/ou d'accélération de rotation disposé sur le véhicule porteur.

7. Arrangement (10) selon l'une des revendications 1 à 6, avec lequel l'au moins un actionneur est formé par au moins un entraînement linéaire à double action fonctionnant avec une pression fluidique, qui établit une liaison de commande entre le véhicule porteur et la rampe de pulvérisation (16) pivotante, un piston de l'entraînement linéaire couplé avec une rampe de pulvérisation (16) et mobile entre deux positions finales séparant l'une de l'autre deux chambres de compression, lesquelles peuvent être chargées en pression de commande fluidique pour chacune des deux directions de positionnement de la rampe de pulvérisation (16).

8. Arrangement (10) selon l'une des revendications 1 à 6, avec lequel l'actionneur est formé par au moins deux entraînements linéaires en sens inverse et fonctionnant respectivement avec une pression fluidique, lesquels établissent une liaison de commande entre le véhicule porteur et la rampe de pulvérisation (16) pivotante, chacun des deux entraînements linéaires possédant respectivement une chambre de compression, et l'un des deux entraînements linéaires pouvant respectivement être chargé en pression de commande fluidique pour une direction de positionnement prédéfinie de la rampe de pulvérisation.

9. Procédé pour commander un arrangement (10) selon l'une des revendications 1 à 8 à l'aide d'une régulation de la position de rotation de la rampe de pulvérisation montée mobile autour d'un axe de rotation sur un véhicule porteur en fonction d'une position de rotation momentanée et/ou d'une pression différentielle mesurée dans au moins deux chambres de compression d'au moins un actionneur fonctionnant avec une pression fluidique,
- au moins une vitesse de rotation et/ou une position de rotation de la rampe de pulvérisation autour de l'axe de rotation par rapport à un plan de référence et/ou par rapport à une surface du sol étant détectée,
- à partir de laquelle des signaux de commande pour au moins un actionneur servant à influencer la position de rotation momentanée de la rampe de pulvérisation (16) autour de l'axe de rotation sont générés dans un dispositif de régulation (36), lequel influence ou commande la position de rotation et/ou la vitesse de rotation de la rampe de pulvérisation (16) au moyen d'au moins deux circuits de régulation couplés, comprenant un circuit de régulation intérieur (66) et un circuit de régulation extérieur (62),
- une valeur de consigne et/ou un couple de consigne pour l'au moins un actionneur (26 ; 28) étant généré par le dispositif de régulation dans le circuit de régulation extérieur (62) à partir des signaux de sortie de l'au moins un système capteur,
- un couple effectif, qui se base sur les excursions de l'actionneur et/ou les signaux de commande de l'au moins un actionneur (26 ; 28) et qui déplace et/ou influence la rampe de pulvérisation (16), étant détecté dans le circuit de régulation intérieur (62) et traité pour générer une valeur de correction pour l'excursion de consigne, **caractérisé en ce que** le circuit de régulation intérieur régule le couple réel ou la force de réglage réelle, lesquels sont effectivement introduits dans la rampe de pulvérisation par l'au moins un actionneur, à l'aide de la valeur de consigne prescrite du circuit de régulation extérieur.

10. Procédé selon la revendication 9, avec lequel les données de mesure de l'au moins un système capteur ainsi que les pressions différentielles entre les deux chambres de compression de l'au moins un actionneur sont utilisées pour déterminer une position de rotation actuelle et/ou une position de rotation de consigne entre la rampe de pulvérisation (16) et le véhicule porteur (12) et traitées par un dispositif de régulation qui commande l'au moins un actionneur.

11. Procédé selon la revendication 9 ou 10, avec lequel le circuit de régulation extérieur génère une valeur de consigne pour la commande de l'au moins un actionneur à partir des données de capteur de l'au moins un système capteur, laquelle prescrit une position de consigne de la rampe de pulvérisation.

12. Procédé selon l'une des revendications 9 à 11, avec lequel le circuit de régulation intérieur tient compte de données de capteur supplémentaires qui sont obtenues en relation directe avec les signaux de commande de l'au moins un actionneur et/ou de leur interaction détectée avec la rampe de pulvérisation suspendue avec mobilité.

13. Procédé selon la revendication 12, avec lequel les données de capteur supplémentaires sont un couple de positionnement introduit par l'actionneur dans la rampe de pulvérisation (16), lequel est mesuré ou dérivé à partir de l'interaction de l'actionneur (26 ; 28) avec la rampe de pulvérisation (16).
